# EUROPÄISCHE PATENTSCHRIFT

(11) **EP 1 218 463 B1**
(45) Veröffentlichungstag und Bekanntmachung des Hinweises auf die Patenterteilung: **28.12.2005**
(21) Anmeldenummer: 00969377.1
(22) Anmeldetag: 02.10.2000
(51) Int. Cl.: C09D 175/16, C08G 18/67, C08F 299/06

(54) **FESTSTOFF, ENTHALTEND ÜBER URETHANGRUPPEN AN DIE GRUNDSTRUKTUR GEBUNDENE GRUPPEN, DIE MIT AKTINISCHER STRAHLUNG AKTIVIERBARE BINDUNGEN ENTHALTEN, UND IHRE VERWENDUNG**
SOLID CONTAINING GROUPS, WHICH ARE BOUND TO THE BASE STRUCTURE VIA URETHANE GROUPS AND WHICH CONTAIN BONDS THAT CAN BE ACTIVATED BY ACTINIC RADIATION, AND THE USE THEREOF
SOLIDE CONTENANT DES GROUPES LIES A LA STRUCTURE DE BASE PAR DES GROUPES URETHANE, QUI CONTIENNENT DES LIAISONS ACTIVABLES PAR RADIATION ACTINIQUE, ET LEUR UTILISATION

(30) Priorität: 02.10.1999 DE 19947523
(43) Veröffentlichungstag der Anmeldung: 03.07.2002
(73) Patentinhaber: BASF Aktiengesellschaft, 67056 Ludwigshafen (DE); BASF Coatings AG, 48165 Münster (DE)
(72) Erfinder: BLUM, Rainer, 67069 Ludwigshafen (DE); SCHWALM, Reinhold, 67157 Wachenheim (DE); KÖNIGER, Rainer, 67251 Freinsheim (DE)
(74) Vertreter: Fitzner, Uwe
(86) Internationale Anmeldenummer: PCT/EP2000/009625
(87) Internationale Veröffentlichungsnummer: WO 2001/025359

(56) Entgegenhaltungen:
- EP-A- 0 410 242
- EP-A- 0 702 067
- EP-A- 0 839 845
- WO-A-92/08747
- WO-A-95/35332
- US-A- 4 017 371

## Beschreibung

Die vorliegende Erfindung betrifft neue Feststoffe, enthaltend über Urethangruppen an die Grundstruktur gebundene Gruppen, die mit aktinischer Strahlung aktivierbare Bindungen enthalten. Außerdem betrifft die vorliegende Erfindung ein neues Verfahren zur Herstellung der neuen Feststoffe. Des weiteren betrifft die vorliegende Erfindung neue Beschichtungsstoffe, Klebstoffe oder Dichtungsmassen, die unter Verwendung der neuen Feststoffe herstellbar sind. Ferner betrifft die vorliegende Erfindung ein neues Verfahren zur Herstellung von neuen Beschichtungen, Klebschichten und Dichtungen auf grundierten oder ungrundierten Substraten, bei dem die neuen Beschichtungsstoffe, Klebstoffe oder Dichtungsmassen angewandt werden. Nicht zuletzt betrifft die vorliegende Erfindung neue grundierte oder ungrundierte Substrate, die neue Beschichtungen, Klebstoffe und/oder Dichtungen enthalten.

Die Beschichtung oder die Lackierung von grundierten oder ungrundierten Substraten mit festen pulverförmigen Beschichtungsstoffen, Klebstoffen und/oder Dichtungsmassen, die mit aktinischer Strahlung gehärtet werden können, gewinnt zunehmend an Interesse. Grund hierfür sind zu erwartende Vorteile bei der Oberflächenglätte und der geringeren thermischen Belastung der Substrate, die sich gegenüber rein thermisch härtbaren Beschichtungsstoffen, Klebstoffen und Dichtungsmassen aus der Trennung von Aufschmelzprozess und Härtungsreaktion ergeben.

Hier und im folgenden ist unter aktinischer Strahlung elektromagnetische Strahlung wie Röntgenstrahlung, UV-Strahlung, sichtbares Licht oder nahes IR-Licht (NIR) oder Korpuskularstrahlung wie Elektronenstrahlen zu verstehen.

Bei der praktischen Entwicklung von mit aktinischer Strahlung härtbaren festen pulverförmigen Beschichtungsstoffen, Klebstoffen und/oder Dichtungsmassen, insbesondere von Pulverlacken, traten indes eine Reihe von Problemen zutage.

Hauptproblem, insbesondere bei radikalisch härtbaren Systemen auf der Basis der anwendungstechnisch besonders attraktiven (meth)acrylatfunktionalisierter Polyurethane, ist die vorzeitige thermisch initiierte Polymerisation. Diese thermische Polymerisation führt zu Problemen bei der Aufarbeitung der Feststoffe zu Pulverlacken, zu der meist mehrfache Aufschmelzprozesse notwendig sind. Noch unangenehmer ist die vorzeitige thermische Polymerisation beim Aufschmelzen der Pulverlacke auf den Substraten vor der Bestrahlung mit aktinischer Strahlung. Der prinzipielle Vorteil von strahlenhärtbaren Pulverlacken gegenüber thermisch härtbaren Pulverlacken, insbesondere bezüglich der Oberflächenglätte, der wegen der Trennung von Aufschmelzprozess und Härtungsreaktion resultiert, kann dann nicht realisiert werden.

Durch die Zugabe ausreichender Mengen an Polymerisationsinhibitoren wie Phenothiazin oder Hydrochinon kann die unerwünschte vorzeitige thermische Polymerisation verhindert werden, gleichzeitig wird aber auch die Reaktivität bei der Belichtung mit aktinischer Strahlung soweit vermindert, daß technisch uninteressante lange Belichtungszeiten resultierten.

Weitere Probleme ergeben sich aus der Forderung nach Blockfestigkeit und niedriger Schmelztemperatur der festen strahlenhärtbaren Pulverlacke, niedriger Viskosität der Schmelzen und guter Elastizität der Beschichtungen. Bei diesen Problemen bestehen mehrfache Scherenfunktionen: (meth)acrylatfunktionalisierte Polyurethane mit niedriger Schmelztemperatur und niedriger Schmelzeviskosität sind meist kristalline monomere Verbindungen oder sehr niedermolekulare oligomere Feststoffe, die nach der Vernetzung spröde Filme bzw. Beschichtungen ergeben. Höhermolekulare (meth)acrylatfunktionalisierte Polyurethane ergeben meist elastischere Filme, haben aber hohe Aufschmelztemperaturen und bilden hochviskose Schmelzen, was die Oberflächenglätte vermindert.

Des weiteren ist die Herstellung der (meth)acrylatfunktionalisierten Polyurethane vergleichsweise aufwendig und daher teuer. Außerdem lassen die bisher bekannten strahlenhärtbaren Pulverlacke hinsichtlich der Kratzfestigkeit, Chemikalienbeständigkeit und Witterungsbeständigkeit der hieraus hergestellten Beschichtungen zu wünschen übrig.

Dies gilt mutatis mutandis auch für die Klebstoffe und Dichtungsmassen.

Wegen ihrer wirtschaftlichen und technologischen Attraktivität hat es nicht an Versuchen gefehlt, die strahlenhärtbaren Pulverlacke weiterzuentwickeln.

So beschreiben die deutsche Patentanmeldung DE-A-24 36 186 oder das US-Patent 3,974,303 pulverförmige und thermoplastische Polymere, die 0,5 bis 3,5 polymerisierbare ungesättigte Doppelbindungen pro 1000 Molgewicht aufweisen, und ihre Verwendung als strahlenhärtbare Bindemittel. Speziell wird ein (meth)acrylatfunktionalisiertes Polyurethan beschrieben, das aus Toluylendiisocyanat, 2-Hydroxyethylmethacrylat und Trimethylolpropan im molaren Verhältnis von 3 : 3 : 1 in der Schmelze hergestellt wird. Das (meth)acrylatfunktionalisierte Polyurethan weist einen Schmelzpunkt von etwa 65°C und einen Gehalt an polymerisierbaren Doppelbindungen von 2,9 Doppelbindungen pro 1.000 Molekulargewicht auf. Es werden indes keine Angaben zur Stabilität der Schmelze gemacht. Es kann als solches als ein mit aktinischer Strahlung härtbarer Pulverlack verwendet werden. Angaben zur Stabilität und zur mechanischen Qualität der hiermit hergestellten Beschichtungen werden nicht gemacht. Wegen ihres hohen Gehalts an aromatischen Strukturen steht indes zu erwarten, daß die hieraus hergestellten Beschichtungen nicht witterungsstabil sind, sondern unter dem Einfluß von Sonnenlicht zur Vergilbung neigen.

Die europäische Patentanmeldung EP-A-0 636 669 beschreibt Mischungen aus ungesättigten Polyestern oder (meth)acrylatfunktionalisierten Polyacrylaten, wobei die Polyacrylate in einer konventionellen Polymerisation erhalten werden, und mit Vinylethern oder (Meth)Acrylestern funktionalisierten Polyurethanen als Vernetzungsmitteln. Aus den Beispielen gehen nur Mischungen aus Polyestern und Vinyletherurethanen hervor. Die Vinyletherurethane werden in Chloroform als Lösemittel hergestellt. Lehren zur Herstellung von olefinisch ungesättigten Polyurethanen unter Überwindung der oben angegebenen komplexen Probleme bei der Entwicklung technisch brauchbarer strahlenhärtbarer Pulverlacke werden nicht gegeben.

Aus der europäischen Patentanmeldung EP-A-0 410 242 sind Polyurethane bekannt, die (Meth)acryloylgruppen in einer Menge, entsprechend 3 bis 10 Gew.-%, bezogen auf das Polyurethan, an =C=C= (Molekulargewicht 24), enthalten. Diese bekannten Polyurethane weisen nicht näher spezifizierte Schmelzpunkte oder Schmelzintervalle im Temperaturbereich von 50 bis 180°C auf. Für ihre Herstellung werden Isophorondiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Düsocyanatotoluol (Toluylendiisocyanat) sowie Biuret-, Isocyanurat- oder Urethan-modifizierte Polyisocyanate auf Basis dieser einfachen Polyisocyanate verwendet. Hinsichtlich der Polyurethane auf der Basis aromatischer Polyisocyanate gilt das vorstehend Gesagte. Ansonsten ist es schwierig, auf der Basis dieser Polyisocyanate Polyurethane herzustellen, die ein besonders enges Schmelzintervall oder gar einen definierten Schmelzpunkt aufweisen. Insbesondere führt die Verwendung von Polyisocyanaten mit einer mittleren Funktionalität >2 zu Polyurethanen einer unerwünscht breiten Molekulargewichtsverteilung, so daß sie in strahlenhärtbaren Pulverlacken nur bedingt verwendbar sind. Einige der in den Beispielen genannten Polyurethane weisen zwar einen Beginn der Erweichung bei praktikablen Temperaturen von 85-95°C auf, durch ihre hohe Verzweigung ist aber bei diesen Temperaturen die Schmelzeviskosität für ihre Verwendung in strahlenhärtbaren Pulverlacken zu hoch. Desweiteren werden die Polyurethane in Ethylacetat als Lösemittel hergestellt, wonach das Lösemittel bei niedrigen Temperaturen im Vakuum verdampft werden muß. Angaben zur Stabilisierung gegen vorzeitige thermische Vernetzung der Schmelzen ohne negative Beeinflussung der Reaktivität bei der Strahlenhärtung werden nicht gemacht. Eine Lehre zur Lösung der oben beschriebenen weiteren komplexen Probleme bei der Entwicklung technisch brauchbarer strahlenhärtbarer Pulverlacke wird nicht gegeben.

Aus der europäischen Patentschrift EP-A-0 783 534 gehen (meht)acrylatfunktionalisierte Polyurethane hervor, die unter Mitverwendung von monofunktionellen Hydroxyverbindungen ohne ungesättigte Gruppen erhalten werden. Dadurch wird zwar die Viskosität gesenkt, aber durch diese nichtreaktiven terminalen Gruppen die Reaktivität bei der Härtung mit aktinischer Strahlung abgesenkt. Gewünscht sind indes mit Peroxiden thermisch vernetzte Lackierungen. Angaben zur Stabilisierung gegen vorzeitige thermische Vernetzung ohne negative Beeinflussung der Reaktivität bei der Strahlenhärtung werden nicht gemacht. Eine Lehre zur Lösung der oben beschriebenen weiteren komplexen Probleme bei der Entwicklung technisch brauchbarer UV-Pulverlack-Systeme wird nicht gegeben.

Aufgabe der vorliegenden Erfindung ist es, neue Feststoffe bereitzustellen, enthaltend über Urethangruppen an die Grundstruktur gebundene Gruppen, die mit aktinischer Strahlung aktivierbare Bindungen enthalten, und die die Nachteile des Standes der Technik nicht mehr länger aufweisen, sondern die sich in einfacher Weise in der Schmelze herstellen lassen, bei vergleichsweise niedrigen Temperaturen schmelzen, in der Schmelze stabil sind und dabei eine niedrige Schmelzeviskosität haben, nicht zu einer vorzeitigen thermischen Vernetzung neigen, eine hohe Reaktivität bei der Härtung mit aktinischer Strahlung zeigen, in Pulverform nicht blocken, sondern frei fließen, und für die Herstellung neuer, insbesondere pulverförmiger Beschichtungsstoffe, Klebstoffe und Dichtungsmassen sehr gut geeignet sind, wobei die neuen Beschichtungsstoffe, Klebstoffe und Dichtungsmassen Beschichtungen, Klebstoffe und Dichtungen liefern sollen, die eine hohe Härte, Elastizität, Kratzfestigkeit, Chemikalienbeständigkeit, Witterungsstabilität und insbesondere die Beschichtungen, speziell die Lackierungen, eine sehr glatte Oberfläche und einen sehr guten optischen Gesamteindruck aufweisen sollen.

Demgemäß wurde der neue Feststoff, enthaltend
(a) im statistischen Mittel mehr als eine Gruppe mit mindestens einer Kohlenstoff-Kohlenstoff-Bindung pro Molekül, wobei die Gruppen strukturell voneinander verschieden oder gleich und über Urethangruppen an die Grundstruktur des Feststoffs gebunden sind, und
(b) 0,01 bis 1 Mol-%, bezogen auf die vorhandenen mit aktinischer Strahlung aktivierbaren Bindungen, mindestens eines chemisch gebundenen Stabilisators,
herstellbar durch Umsetzung der Ausgangsprodukte in der Schmelze.

Im folgenden werden die neuen Feststoffe zusammenfassend als "erfindungsgemäße Feststoffe" bezeichnet.

Außerdem wurden die neuen Beschichtungsstoffe, Klebstoffe und Dichtungsmassen gefunden, die mit Hilfe der erfindungsgemäßen Feststoffe hergestellt werden und im folgenden als "erfindungsgemäße Beschichtungsstoffe, Klebstoffe und Dichtungsmassen" bezeichnet werden.

Desweiteren wurde das neue Verfahren zur Herstellung von Beschichtungen, Klebschichten oder Dichtungen für grundierte oder ungrundierte Substrate, bei dem man
(1) mindestens einen erfindungsgemäßen Beschichtungsstoff und/oder Klebstoff und/oder mindestens eine erfindungsgemäße Dichtungsmasse in der Form
   (1.1) einer Schmelze,
   (1.2) eines Pulvers,
   (1.3) einer Pulverslurry oder
   (1.4) einer Dispersion oder einer Lösung in mindestens einem organischen Lösemittel auf das grundierte oder ungrundierte Substrat appliziert,
(2) die resultierende Pulverslurry-Schicht (1.3) oder die resultierende Schicht aus einer Dispersion oder einer Lösung (1.4) trocknet oder die resultierende Schicht der Schmelze (1.1) erstarren läßt oder durch Erhitzen weiterhin in geschmolzenem Zustand hält,
(3) die resultierende feste Schicht (1.2), (1.3) oder (1.4) durch Erhitzen aufschmilzt und
(4) die im Verfahrenschritt (2) oder (3) resultierende geschmolzene Schicht
   (4.1) im geschmolzenen Zustand,
   (4.2) beim Erstarren und/oder
   (4.3) nach dem Erstarren
mit aktinischer Strahlung härtet.

Im folgenden wird das neue Verfahren zur Herstellung von Beschichtungen, Klebschichten und Dichtungen für grundierte oder ungrundierte Substrate aus den erfindungsgemäßen Beschichtungsstoffen, Klebstoffen und Dichtungsmassen als "erfindungsgemäßes Verfahren" bezeichnet.

Darüberhinaus wurden die neuen Beschichtungen, Klebschichten und Dichtungsmassen gefunden, die mit Hilfe der erfindungsgemäßen Beschichtungsstoffe, Klebstoffe und Dichtungsmassen und/oder nach dem erfindungsgemäßen Verfahren hergestellt und im folgenden als "erfindungsgemäße Beschichtungen, Klebschichten und Dichtungsmassen" bezeichnet werden.

Nicht zuletzt wurden die neuen grundierten oder ungrundierten Substrate gefunden, die mindestens eine erfindungsgemäße Beschichtung, Klebschicht und/oder Dichtung aufweisen und im folgenden zusammenfassend als "erfindungsgemäße Substrate" bezeichnet werden.

Weitere erfindungsgemäße Gegenstände ergeben sich aus der nachfolgenden Beschreibung.

Der erfindungsgemäße Feststoff enthält in einer ersten erfindungsgemäßen Variante pro Molekül im statistischen Mittel mindestens zwei Gruppen (a) mit mindestens einer mit aktinischer Strahlung aktivierbaren Bindung.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor-oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe (a) eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der Gruppe (a) vorliegen. Erfindungsgemäß ist es von besonderem Vorteil zwei, insbesondere eine, Doppelbindung zu verwenden.

Desweiteren enthält der erfindungsgemäße Feststoff im statistischen Mittel zwei oder mehr Gruppen (a). Dies bedeutet, daß die Funktionalität des erfindungsgemäßen Feststoffs ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich einerseits nach den stöchiometrischen Verhältnissen der Ausgangsprodukte des erfindungsgemäßen Feststoffs, die sich andererseits wieder nach dessen Anwendungszwecken richten. Hier zeigt sich ein weiterer besonderer Vorteil des erfindungsgemäßen Feststoffs, daß er nämlich in seiner chemischen Zusammensetzung außerordentlich breit variiert und so den Erfordernissen des jeweiligen Anwendungszwecks leicht angepaßt werden kann.

Erfindungsgemäß sind die mindestens zwei Gruppen (a) strukturell voneinander verschieden. Im Rahmen der vorliegenden Erfindung bedeutet dies, daß zwei, drei, vier oder mehr, insbesondere aber zwei, Gruppen (a) verwendet werden, die sich von zwei, drei, vier oder mehr, insbesondere aber zwei, Monomerklassen ableiten.

Beispiele geeigneter Gruppen (a) sind (Meth)acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen.

Demnach enthält der erfindungsgemäße Feststoff eine Kombination von zwei, drei, vier oder mehr, insbesondere aber von zwei, der vorstehend genannten Gruppen (a), beispielsweise
- (Meth)acrylatgruppen und Ethacrylat-, Crotonat-, Cinnamat-, Vinylether-, Vinylester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butenylestergruppen;
- Cinnamatgruppen und (Meth)acrylat-, Ethacrylat-, Crotonat-, Vinylether-, Vinyiester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butenylestergruppen;
- Vinylethergruppen und (Meth)acrylat-, Ethacrylat-, Crotonat-, Cinnamat-, Vinylester-, Dicyclopentadienyl-, Norbornenyl-, Isoprenyl-, Isopropenyl-, Allyl- und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butenylestergruppen; oder
- Allylgruppen und (Meth)acrylat-, Ethacrylat-, Crotonat-, Cinnamat-, Vinylether-, Vinylester-, Dicyclopentadienyl-, Norbornenyl-, Isoprenyl-, Isopropenyl-, und/oder Butenylgruppen; Dicyclopentadienyl-, Norbornenyl-, Isoprenyl-, Isopropenyl-, Allyl- und/oder Butenylethergruppen und/oder Dicyclopentadienyl-, Norbornenyl-, Isoprenyl-, Isopropenyl-, Allyl- und/oder Butenylestergruppen.

Erfindungsgemäß sind die Kombinationen der (Meth)acrylatgruppe, insbesondere der Acrylatgruppe, mit mindestens einer, insbesondere einer, weiteren Art von Gruppen (a) von Vorteil und werden deshalb bevorzugt verwendet.

Die Gruppen (a) sind über Urethangruppen an die Grundstruktur des erfindungsgemäßen Feststoffs gebunden. Hierfür kommen die folgenden beiden verküpfenden Strukturen I und II in Betracht:
**Grundstruktur-NH-C(O)-O-Gruppe (a)** (I) und
**Grundstruktur-O-(O)C-NH-Gruppe (a)** (II).

In dem erfindungsgemäßen Feststoffkönnen beide verküpfenden Strukturen I und II oder nur eine von ihnen vorliegen. Im allgemeinen ist die Struktur I wegen der größeren Anzahl der zur Verfügung stehenden Ausgangsprodukte und deren vergleichsweise einfacheren Herstellbarkeit von Vorteil und wird deshalb erfindungsgemäß bevorzugt angewandt.

Die Gruppen (a) sind an die Grundstruktur endständig und/oder lateral gebunden. Welche Art der Anbindung gewählt wird, richtet sich insbesondere danach, ob die funktionellen Gruppen in der Grundstruktur, mit denen die Ausgangsprodukte der Gruppen (a) zu reagieren vermögen, endständig oder lateral vorliegen. Häufig haben endständige Gruppen (a) wegen fehlender sterischer Abschirmung eine höhere Reaktivität als laterale Gruppen (a) und werden deshalb bevorzugt verwendet. Andererseits aber kann die Reaktivität des erfindungsgemäßen Feststoffs über das Verhältnis von endständigen und lateralen Gruppen (a) gezielt gesteuert werden, was ein weiterer besonderer Vorteil des erfindungsgemäßen Feststoffs ist.

Die Grundstruktur des erfindungsgemäßen Feststoffs ist niedermolekular, oligomer und/oder polymer. D.h., der erfindungsgemäße Feststoff ist eine niedermolekulare Verbindung, ein Oligomer oder ein Polymer. Oder aber der erfindungsgemäße Feststoff weist niedermolekulare und oligomere, niedermolekulare und polymere, oligomere und polymere oder niedermolekulare, oligomere und polymere Grundstrukturen auf, d.h., er ist ein Gemisch von niedermolekularen Verbindungen und Oligomeren, niedermolekularen Verbindungen und Polymeren, Oligomeren und Polymeren oder niedermolekularen Verbindungen, Oligomeren und Polymeren.

Im Rahmen der vorliegenden Erfindung werden unter Oligomeren Harze verstanden, die mindestens 2 bis 15 wiederkehrende Monomereinheiten in ihrem Molekül enthalten. Im Rahmen der vorliegenden Erfindung werden unter Polymeren Harze verstanden, die mindestens 10 wiederkehrende Monomereinheiten in ihrem Molekül enthalten. Ergänzend wird zu diesen Begriffen auf Römpp Lexikon Lacke und Druckfarben, Georg Thieme Verlag, Stuttgart, New York, 1998, »Oligomere«, Seite 425, verwiesen.

Die niedermolekulare, oligomere oder polymere Grundstruktur enthält aromatische, cycloaliphatische und/oder aliphatische Strukuren bzw. Bausteine oder besteht aus diesen. Vorzugsweise enthält sie cycloaliphatische und/oder aliphatische Strukturen, insbesondere cycloaliphatische und aliphatische Strukturen, oder besteht aus diesen.

Beispiele geeigneter aromatischer Strukturen sind aromatische und heteroaromatische Ringe, insbesondere Benzolringe.

Beispiele cycloaliphatischer Stukturen sind Cyclobutan-, Cyclopentan-, Cyclohexan-, Cycloheptan-, Norbonan-, Camphan-, Cyclooctan- oder Tricyclodecanringe, insbesondere Cyclohexanringe.

Beispiele aliphatischer Strukturen sind linerare oder verzweigte Alkylketten mit 2 bis 20 Kohlenstoffatomen oder Ketten, wie sie aus der (Co)Polymerisation olefinisch ungesättigter Monomere resultieren.

Die Grundstruktur, insbesondere die oligomere und/oder polymere Grundstruktur, kann außerdem olefinisch ungesättigte Doppelbindungen enthalten.

Die Grundstruktur, insbesondere die oligomere und/oder polymere Grundstruktur, ist von linearer, verzweigter, hyperverzweigter oder dendrimerer Struktur.

Sie kann mehrbindige, insbesondere zweibindige, funktionelle Gruppen (c) enthalten, durch die die vorstehend beschriebenen Strukturen bzw. Bausteine miteinander zu der Grundstruktur verknüpft werden. Diese werden im allgemeinen so ausgewählt, daß sie die durch aktinische Strahlung und/oder thermisch initiierten Reaktionen nicht stören oder gar völlig verhindern. Beispiele geeigneter funktioneller Gruppen sind Ether-, Thioether-, Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen. Von diesen Gruppen sind die Ether-, Carbonsäureester-, Carbonat-, Carbonsäureamid-, Harnstoff-, Urethan-, Imid- und Carbonatgruppen, insbesondere die Carbonsäureester- und die Urethangruppen, von Vorteil und werden deshalb bevorzugt verwendet.

Vorteilhafte oligomere und polymere Grundstrukturen leiten sich somit ab von statistisch, alternierend und/oder blockartig aufgebauten linearen, verzweigten, hyperverzweigten, dendrimeren und/oder kammartig aufgebauten (Co)Polymerisaten von ethylenisch ungesättigten Monomeren, Polyadditionsharzen und/oder Polykondensationsharzen. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze« verwiesen.

Beispiele gut geeigneter (Co)Polymerisate sind Poly(meth)acrylate und partiell verseifte Polyvinylester.

Beispiele gut geeigneter Polyadditionsharze und/oder Polykondensationsharze sind Polyester, Alkyde, Polyurethane, Polyester-Polyurethane, Polylactone, Polycarbonate, Polyether, Polyester-Polyether, Epoxidharz-Amin-Addukte, Polyharnstoffe, Polyamide oder Polyimide. Von diesen sind die Polyester, Polyester-Polyether, Polyurethane und Polyester-Polyurethane besonders vorteilhaft und werden deshalb erfindungsgemäß ganz besonders bevorzugt verwendet.

Die Grundstruktur kann des weiteren chemisch gebundenen Photoinitiatoren und/oder Photocoinitiatoren (d) enthalten. Beispiele geeigneter chemisch gebundener Photoinitiatoren sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Band 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide. Ein Beispiel für einen geeigneten Photocoinitiator ist Anthracen. Wenn die chemisch gebundenen Photoinitiatoren und/oder Photocoinitiatoren (d) mit verwendet werden, sind sie in dem erfindungsgemäßen Feststoff in einer Menge, entsprechend im statistischen Mittel 0,01 bis 2,0 Gruppen (d) pro Molekül, enthalten.

Die Grundstruktur kann ferner laterale reaktive funktionelle Gruppen (e) tragen, die mit reaktiven funktionellen Gruppen (e) der eigenen Art oder mit anderen, komplementären, funktionellen Gruppen (f) radikalisch, ionisch und/oder thermisch initiierte Vernetzungsreaktionen eingehen können. Hierbei können die komplementären funktionellen Gruppen (e) und (f) in ein und derselben Grundstruktur vorliegen, was bei sogenannten selbstvernetzenden Systemen der Fall ist. Die funktionellen Gruppen (f) können indes auch in einem weiteren, stofflich von dem erfindungsgemäßen Feststoff verschiedenen Bestandteil, beispielsweise einem Vernetzungsmittel, vorliegen, was bei sogenannten fremdvernetzenden Systemen der Fall ist. Ergänzend wird auf Römpp Lexikon Lacke und Druckfarben, Georg Thieme Verlag, Stuttgart, New York, 1998, »Härtung«, Seiten 274 bis 276, verwiesen. Reaktive funktionelle Gruppen (e) und (f) werden insbesondere dann verwendet, wenn der erfindungsgemäße Feststoff mit aktinischer Strahlung und thermisch härtbar sein soll (Dual Cure). Sie werden so ausgewählt, daß sie die mit aktinischer Strahlung initiierte Polymerisation oder Vernetzungsreaktion der Doppelbindungen der Gruppen (a) nicht stören oder gar völlig verhindern. Indes können reaktive funktionelle Gruppen (e) und (f), die an olefinisch ungesättigte Doppelbindungen addieren, in untergeordneten, d. h. in nicht störenden, Mengen mit verwendet werden.

Beispiele geeigneter komplementärer reaktiver funktioneller Gruppen (e) und (f) gehen aus der nachfolgenden Übersicht hervor.

### Übersicht: Komplementäre reaktive funktionelle Gruppen (e) und (f)

| **(e) und (f)** | |
|---|---|
| oder | |
| **(f) und (e)** | |
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| | -CH₂-O-CH₃ |
| | -NH-C(O)-CH(-C(O)OR)₂ |
| | -NH-C(O)-CH(-C(O)OR)(-C(O)-R) |
| | -NH-C(O)-NR¹R² |
| | = Si(OR)₂ |
| | O |
| | -CH-CH₂ |
| -C(O)-OH | O |
| | -CH-CH₂ |
| -O-C(O)-CR=CH2 | -OH |
| -O-CR=CH₂ | -NH₂ |
| | -C(O)-CH₂-C(O)-R |

In der Übersicht steht die Variable R für einen acyclischen oder cyclischen aliphatischen, einen aromatischen und/oder einen aromatisch-aliphatischen (araliphatischen) Rest; die Variablen R¹ und R² stehen für gleiche oder verschiedene aliphatische Reste oder sind miteinander zu einem aliphatischen oder heteroaliphatischen Ring verknüpft.

Sofern die reaktiven komplementären Gruppen (e) und/oder (f) mit verwendet werden, sind sie dem erfindungsgemäßen Feststoff vorzugsweise in einer Menge, entsprechend im statistischen Mittel 0,1 bis 4 Gruppen pro Molekül, enthalten.

Die Herstellung der erfindungsgemäß zu verwendenden Grundstrukturen weist keine methodischen Besonderheiten auf, sondern erfolgt mit Hilfe der üblichen und bekannten Synthesemethoden der niedermolekularen organischen Chemie und/oder der Polymerchemie. Was die erfindungsgemäß ganz besonders bevorzugten oligomeren und/oder polymeren Grundstrukturen betrifft, die sich von Polyestern, Polyester-Polyethern, Polyurethanen und Polyester-Polyurethanen, insbesondere aber den Polyurethanen und Polyester-Polyurethanen, ableiten, werden die üblichen und bekannten Methoden der Polyaddition und/oder Polykondensation angewandt.

Bekanntermaßen werden die erfindungsgemäß ganz besonders bevorzugten Polyurethane und Polyester-Polyurethane aus Polyolen und Diisocyanaten sowie gegebenenfalls Polyaminen und Aminoalkoholen hergestellt. Hierbei werden die Polyole und Diisocyanate sowie gegebenenfalls die Polyamine und Aminoalkohole in Molverhältnissen angewandt, daß hydroxylgruppenterminierte oder isocyanatgruppenterminierte Polyurethane oder Polyester-Polyurethane resultieren.

Vorzugsweise werden für die Herstellung der Polyurethane und Polyester-Polyurethane Diisocyanate sowie gegebenenfalls in untergeordneten Mengen Polyisocyanate zur Einführung von Verzweigungen verwendet. Im Rahmen der vorliegenden Erfindung sind unter untergeordneten Mengen Mengen zu verstehen, die kein Gelieren der Polyurethane und Polyester-Polyurethane bei ihrer Herstellung bewirken. Letzteres kann auch noch durch die Mitverwendung geringer Mengen an Monoisocyanaten verhindert werden.

Beispiele für geeignete Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethyl-cyclohexan, 1-Isocyanato-2-(3-isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan, Dicyclohexylmethan-2,4'-diisocyanat, Trimethylendiisocyanat, Tetramethylendiisocyanat, Pentamethylendiisocyanat, Hexamethylendiisocyanat, Ethylethylendiisocyanat, Trimethylhexandiiocyanat, Heptanmethylendiisocyanat oder Diisocyanate, abgeleitet von Dimerfettsäuren, wie sie unter der Handelsbezeichnung DDI 1410 von der Firma Henkel vertrieben und in den Patentschriften DO 97/49745 und WO 97/49747 beschrieben werden, insbesondere 2-Heptyl-3,4-bis(9-isocyanatononyl)-1-pentyl-cyclohexan, oder 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan, 1,2-, 1,4- oder 1,3-Bis(4-isocyanatobut-1-yl)cyclohexan, flüssiges Bis(4-isocyanatocyclohexyl)methan eines trans/trans-Gehalts von bis zu 30 Gew.%, vorzugsweise 25 Gew.-% und insbesondere 20 Gew.%, wie es den Patentschriften DE-A-44 14 032, GB-A-1220717, DE-A-16 18 795 oder DE-A-17 93 785 beschrieben wird; Toluylendiisocyanat, Xylylendiisocyanat, Bisphenylendiisocyanat, Naphthylendiisocyanat oder Diphenylmethandiisocyanat.

Beispiele geeigneter Polyisocyanate sind die Isocyanurate der vorstehend beschriebenen Diisocyanate. Weitere Beispiele geeigneter Polyisocyanate sind isocyanatgruppenhaltige Polyurethanpräpolymere, die durch Reaktion von Polyolen mit einem Überschuß an Polyisocyanaten hergestellt werden können und bevorzugt niederviskos sind. Es können auch Biuret-, Allophanat-, Iminooxadiazindion-, Urethan-, Harnstoff- Carbodiimid und/oder Uretdiongruppen aufweisende Polyisocyanate verwendet werden. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Beispiele gut geeigneter Monoisocyanate sind Phenylisocyanat, Cyclohexylisocyanat oder Stearylisocyanat.

Beispiele geeigneter Polyole sind gesättigte und ungesättigte höhermolekulare und niedermolekulare Polyole, insbesondere Diole und in untergeordneten Mengen Triole oder höherfunktionelle Polyole zur Einführung von Verzweigungen.

Beispiele geeigneter Polyole sind gesättigte oder olefinisch ungesättigte Polyesterpolyole, welche durch Umsetzung von
- gegebenenfalls sulfonierten gesättigen und/oder ungesättigten Polycarbonsäuren oder deren veresterungsfähigen Derivaten, gegebenenfalls zusammen mit Monocarbonsäuren, sowie
- gesättigten und/oder ungesättigten Polyolen, gegebenenfalls zusammen mit Monoolen,
hergestellt werden.

Beispiele für geeignete Polycarbonsäuren sind aromatische, aliphatische und cycloaliphatische Polycarbonsäuren. Bevorzugt werden aromatische und/oder aliphatische Polycarbonsäuren eingesetzt.

Beispiele für geeignete aromatische Polycarbonsäuren sind Phthalsäure, Isophthalsäure, Terephthalsäure, Phthalsäure-, Isophthalsäure- oder Terephthalsäuremonosulfonat, oder Halogenphthalsäuren, wie Tetrachlor- bzw. Tetrabromphthalsäure, von denen Isophthalsäure vorteilhaft ist und deshalb bevorzugt verwendet wird.

Beispiele für geeignete acyclische aliphatische oder ungesättigte Polycarbonsäuren sind Malonsäure, Bernsteinsäure, Glutarsäure, Adipinsäure, Pimelinsäure, Korksäure, Azelainsäure, Sebacinsäure, Undecandicarbonsäure oder Dodecandicarbonsäure oder Maleinsäure, Fumarsäure oder Itaconsäure von denen Adipinsäure, Glutarsäure, Azelainsäure, Sebacinsäure und Maleinsäure vorteilhaft sind und deshalb bevorzugt verwendet werden.

Beispiele für geeignete cycloaliphatische und cyclische ungesättigte Polycarbonsäuren sind 1,2-Cyclobutandicarbonsäure, 1,3-Cyclobutandicarbonsäure, 1,2-Cyclopentandicarbonsäure, 1,3-Cyclopentandicarbonsäure, Hexahydrophthalsäure, 1,3-Cyclohexandicarbonsäure, 1,4-Cyclohexandicarbonsäure, 4-Methylhexahydrophthalsäure, Tricyclodecandicarbonsäure, Tetrahydrophthalsäure, Endomethylentetrahydrophthalsäure oder 4-Methyltetrahydrophthalsäure. Diese Dicarbonsäuren können sowohl in ihrer cis- als auch in ihrer trans-Form sowie als Gemisch beider Formen eingesetzt werden.

Weitere Beispiele für geeignete Polycarbonsäuren sind polymere Fettsäuren, insbesondere solche mit einem Dimerengehalt von mehr als 90 Gew.%, die auch als Dimerfettsäuren bezeichnet werden.

Geeignet sind auch die veresterungsfähigen Derivate der obengenannten Polycarbonsäuren, wie z.B. deren ein- oder mehrwertige Ester mit aliphatischen Alkoholen oder Polyolen mit 1 bis 4-C-Atomen. Außerdem können auch die Anhydride der obengenannten Polycarbonsäuren eingesetzt werden, sofern sie existieren.

Gegebenenfalls können zusammen mit den Polycarbonsäuren auch Monocarbonsäuren eingesetzt werden, wie beispielsweise Benzoesäure, tert.-Butylbenzoesäure Capronsäure, Caprylsäure, Caprinsäure, Laurinsäure, Palmitinsäure oder Stearinsäure, sonstige Fettsäuren natürlich vorkommender Öle, Acrylsäure, Methacrylsäure, Ethacrylsäure, Crotonsäure oder das Addukt von Dicyclopentadien und Maleinsäureanhydrid im Molverhältnis 1 : 1.

Beispiele geeigneter Polyole sind Diole, Triole, Tetrole und Zuckeralkohole, insbesondere aber Diole. Üblicherweise werden die höherfunktionellen Polyole neben den Diolen in untergeordneten Mengen verwendet, um Verzweigungen in die Polyesterpolyole einzuführen. Im Rahmen der vorliegenden Erfindung sind unter untergeordneten Mengen Mengen zu verstehen, die kein Gelieren der Polyesterpolyole bei ihrer Herstellung bewirken.

Geeignete Diole sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol, Trimethylpentandiol, Ethylbutylpropandiol, Bisphenol A, hydriertes Bisphenol A oder die stellungsisomeren Diethyloctandiole. Diese Diole können auch als solche für die Herstellung der erfindungsgemäß zu verwendenden Polyurethane (A) eingesetzt werden.

Weitere Beispiele geeigneter Diole sind Diole der Formel III oder IV: 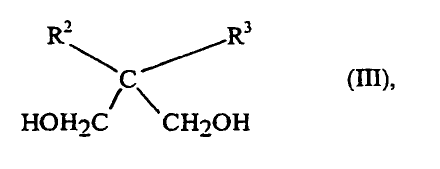 in der R² und R³ jeweils einen gleichen oder verschiedenen Rest darstellen und für einen Alkylrest mit 1 bis 18 C-Atomen, einen Arylrest oder einen cycloaliphatischen Rest stehen, mit der Maßgabe, daß R² und/oder R³ nicht Methyl sein darf; 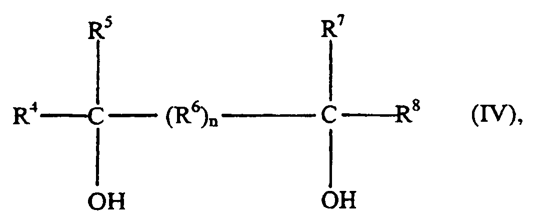 in der R⁴, R⁵, R⁷ und R⁸ jeweils gleiche oder verschiedene Reste darstellen und für einen Alkylrest mit 1 bis 6 C-Atomen, einen Cycloalkylrest oder einen Arylrest stehen und R⁶ einen Alkandiylrest mit 1 bis 6 C-Atomen, einen Arylenrest oder einen ungesättigten Alkendiylrest mit 1 bis 6 C-Atomen darstellt, und n entweder 0 oder 1 ist.

Als Diole III der allgemeinen Formel III sind alle Propandiole der Formel geeignet, bei denen entweder R² oder R³ oder R² und R³ nicht gleich Methyl ist, wie beispielsweise 2-Butyl-2-ethylpropandiol-1,3, 2-Butyl-2-methylpropandiol-1,3, 2-Phenyl-2-methylpropan-diol-1,3, 2-Propyl-2-ethylpropandiol-1,3, 2-Di-tert.-butylpropandiol-1,3, 2-Butyl-2-propylpropandiol-1,3, 1-Dihydroxymethyl-bicyclo[2.2.1]heptan, 2,2-Diethylpro-pandiol-1,3, 2,2-Dipropylpropandiol-1,3 oder 2-Cyclo-hexyl-2-methylpropandiol-1,3 und andere.

Als Diole IV der allgemeinen Formel IV können beispielsweise 2,5-Dimethylhexandiol-2,5, 2,5-Diethylhexandiol-2,5, 2-Ethyl-5-methylhexandiot-2,5, 2,4-Dimethylpentandiol-2,4, 2,3-Dimethylbutandiol-2,3, 1,4-(2'-Hydroxypropyl)-benzol und 1,3-(2'-Hydroxypropyl)-benzol eingesetzt werden.

Die vorstehend genannten Diole können auch als solche für die Herstellung der Polyurethane und Polyester-Polyurethane eingesetzt werden.

Beispiele geeigneter Triole sind Trimethylolethan, Trimethylolpropan oder Glycerin, insbesondere Trimethylolpropan.

Beispiele geeigneter Tetrole sind Pentaerythrit oder Homopentaerythrit.

Beispiele geeigneter höher funktioneller Polyole sind Zuckeralkohole wie Threit, Erythrit, Arabit, Adonit, Xylit, Sorbit, Mannit oder Dulcit.

Die vorstehend genannten höherfunktionellen Polyole können auch als solche für die Herstellung der Polyurethane und Polyester-Polyurethane eingesetzt werden (vgl. die Patentschrift EP-A-0 339 433).

Gegebenenfalls können untergeordnete Mengen von Monoolen mit verwendet werden. Beispiele geeigneter Monoole sind Alkohole oder Phenole wie Ethanol, Propanol, n-Butanol, sec.- Butanol, tert.-Butanol, Amylalkohole, Hexanole, Fettalkohole, Allylalkohol oder Phenol.

Die Herstellung der Polyesterpolyole kann in Gegenwart geringer Mengen eines geeigneten Lösemittels als Schleppmittel durchgerührt werden. Als Schleppmittel werden z. B. aromatische Kohlenwasserstoffe, wie insbesondere Xylol und (cyclo)aliphatische Kohlenwasserstoffe, z. B. Cyclohexan oder Methylcyclohexan, eingesetzt.

Weitere Beispiele geeigneter Polyole sind hydroxylgruppenhaltige Polybutadiene oder Polyurethane.

Weitere Beispiele geeigneter Polyole sind Polyesterdiole, die durch Umsetzung eines Lactons mit einem Diol erhalten werden. Sie zeichnen sich durch die Gegenwart von entständigen Hydroxylgruppen und wiederkehrenden Polyesteranteilen der Formel -(-CO-(CHR⁹)ₘ- CH₂-O-)- aus. Hierbei ist der Index m bevorzugt 4 bis 6 und der Substitutent R⁹ = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.

Für die Herstellung der Polyesterdiole wird das unsubstituierte ###-Caprolacton, bei dem m den Wert 4 hat und alle R⁹-Substituenten Wasserstoff sind, bevorzugt. Die Umsetzung mit Lacton wird durch niedermolekulare Polyole wie Ethylenglykol, 1,3-Propandiol, 1,4-Butandiol oder Dimethylolcyclohexan gestartet. Es können jedoch auch andere Reaktionskomponenten, wie Ethylendiamin, Alkyldialkanolamine oder auch Harnstoff mit Caprolacton umgesetzt werden. Als höhermolekulare Diole eignen sich auch Polylactamdiole, die durch Reaktion von beispielsweise ###-Caprolactam mit niedermolekularen Diolen hergestellt werden.

Beispiele für gut geeignete aliphatische Polyesterdiole der vorstehend beschriebenen Art sind die Polycaprolactondiole, die unter der Marke CAPA® von der Firma Solvay Interox vertrieben werden.

Weitere Beispiele geeigneter Polyole sind Polyetherpolyole, insbesondere mit einem zahlenmittleren Molekulargewicht von 400 bis 5000, insbesondere von 400 bis 3000. Gut geeignete Polyetherdiole sind z.B. Polyetherdiole der allgemeinen Formel H-(-O-(CHR¹⁰)ₒ-)ₚOH, wobei der Substituent R¹⁰ = Wasserstoff oder ein niedriger, gegebenenfalls substituierter Alkylrest ist, der Index o = 2 bis 6, bevorzugt 3 bis 4, und der Index p = 2 bis 100, bevorzugt 5 bis 50, ist. Als besonders gut geeignete Beispiele werden lineare oder verzweigte Polyetherdiole wie Poly(oxyethylen)glykole, Poly(oxypropylen)glykole und Poly(oxybutylen)glykole genannt.

Auch diese Polyole können als solche für die Herstellung der Polyurethane oder Polyester-Polyurethane verwendet werden.

Zur Herstellung der Polyurethane und Polyester-Polyurethane können Polyamine und Aminoalkohole verwendet werden, die eine Molekulargewichtserhöhung der Grundstruktur bewirken. Wesentlich ist hierbei, daß die Polyamine und Aminoalkohole in einer Menge angewandt werden, daß noch freie Isocyanatgruppen oder Hydroxylgruppen im Molekül verbleiben.

Beispiele geeigneter Polyamine weisen mindestens zwei primäre und/oder sekundäre Aminogruppen auf. Polyamine sind im wesentlichen Alkylenpolyamine mit 1 bis 40 Kohlenstoffatomen, vorzugsweise etwa 2 bis 15 Kohlenstoffatomen. Sie können Substituenten tragen, die keine mit Isocyanat-Gruppen reaktionsfähige Wasserstoffatome haben. Beispiele sind Polyamine mit linearer oder verzweigter aliphatischer, cycloaliphatischer oder aromatischer Struktur und wenigstens zwei primären Aminogruppen.

Als Diamine sind zu nennen Hydrazin, Ethylendiamin, Propylendiamin, 1,4-Butylendiamin, Piperazin, 1,4-Cyclohexyldimethylamin, Hexamethylendiamin-1,6, Trimethylhexamethylendiamin, Methandiamin, Isophorondiamin, 4,4'-Diaminodicyclohexylmethan und Aminoethylenothanolamin. Bevorzugte Diamine sind Hydrazin, Alkyl- oder Cycloalkyldiamine wie Propylendiamin und 1-Amino-3-aminomethyl-3,5,5-trimethyl-cyclohexan.

Es können auch Polyamine eingesetzt werden, die mehr als zwei Aminogruppen im Molekül enthalten. In diesen Fällen ist jedoch - z.B. durch Mitverwendung von Monoaminen - darauf zu achten, daß keine vemetzten Polyurethanharze erhalten werden. Solche brauchbaren Polyamine sind Diethylentriamin, Triethylentetramin, Dipropylendiamin und Dibutylentriamin. Als Beispiel für ein Monoamin ist Ethylhexylamin zu nennen (vgl. die Patentschrift EP-A- 0 089 497).

Beispiele geeigneter Aminoalkohole sind Ethanolamin, Diethanolamin oder Triethanolamin.

Die erfindungsgemäß zu verwendenden vorstehend beschriebenen Gruppen (a) werden mit Hilfe geeigneter Ausgangsprodukte (a) bereits bei der Herstellung der Grundstruktur oder nach der Herstellung der Grundstruktur durch polymeranaloge Reaktionen eingeführt, wodurch der erfindungsgemäße Feststoff resultiert.

Es ist erfindungswesentlich, daß bei der Umsetzung der Ausgangsprodukte (a) die vorstehend beschriebenen verknüpfenden Urethangruppen I und/oder II entstehen.

Die Auswahl der Ausgangsprodukte (a) richtet sich daher vor allem danach, ob
(i) in der Grundstruktur seitenständige und/oder endständige Isocyanatgruppen und/oder in den übrigen Ausgangsprodukten für die Grundstruktur Isocyanatgruppen oder
(ii) in der Grundstruktur seitenständige und/oder endständige Hydroxylgruppen und/oder in den übrigen Ausgangsprodukten für die Grundstruktur Hydroxylgruppen
vorhanden sind.

Im Falle (i) enthalten die Ausgangsprodukte (a) eine Hydroxylgruppe, die mit den freien Isocyanatgruppen der Grundstruktur und/oder den Isocyanatgruppen der übrigen Ausgangsprodukte zu den verknüpfenden Urethangruppen I reagiert.

Im Falle (ii) enthalten die Ausgangsprodukte (a) eine Isocyanatgruppe, die mit den Hydroxylgruppen der Grundstruktur und/oder den Hydroxylgruppen der übrigen Ausgangsprodukten zu den verknüpfenden Urethangruppen II reagiert.

In einer dritten Variante (iii) enthalten die Ausgangsprodukte (a) bereits eine vorgebildete verknüpfende Urethangruppe I oder II. Außerdem enthalten diese Ausgangsprodukte (a) mindestens zwei, insbesondere zwei, reaktive funktionelle Gruppen, die mit geeigneten reaktiven funktionellen Gruppen in weiteren Ausgangsprodukten zu den zweibindigen funktionellen Gruppen (c) reagieren. Beispiele gut geeigneter reaktiver funktioneller Gruppen sind die vorstehend beschriebenen komplementären reaktiven funktionellen Gruppen (e) und (f), von denen die Hydroxylgruppen und Isocyanatgruppen besonders vorteilhaft sind und erfindungsgemäß ganz besonders bevorzugt verwendet werden.

Beispiele geeigneter Ausgangsprodukte (a) für die Variante (i) sind demnach übliche und bekannte Monomere, welche mindestens eine Hydroxylgruppe pro Molekül tragen, wie
- Norbomenol, Dicyclopentadienol, Isoprenyl-, Isopropenyl-, Allyl- und/oder Butenylalkohol;
- 2-Hydroxyethyl-, 2-Hydroxypropyl-, 3-Hydroxypropyl-, 3-Hydroxybutyl-, 4-Hydroxybutyl-, Bis(hydroxymethyl)cyclohexan-, Neopentylglykol-, Diethylenglykol-, Dipropylenglykol-, Dibutylenglykol-, Triethylenglykolacrylat, -methacrylat, -ethacrylat, -crotonat, -cinnamat, -vinylether, -allylether, -isoprenylether, -isopropenylether oder -butenylether;
- Trimethylolpropandi-, Glycerindi-, Trimethylolethandi-, Pentaerythrittri- oder Homopentaerythrittriacrylat, -methacrylat, -ethacrylat, -crotonat, -cinnamat, -vinylether, -allylether, -isoprenylether, -isopropenylether oder -butenylether; oder
- Umsetzungsprodukte aus cyclischen Estern, wie z.B. epsilon-Caprolacton, und den vorstehend beschriebenen hydroxylgruppenhaltige Monomeren.

Von diesen sind die Acrylate, insbesondere 2-Hydroxyethyl-, 2-Hydroxypropyl-, 3-Hydroxypropyl-, 3-Hydroxybutyl- und 4-Hydroxybutylacrylat, speziell 2-Hydroxyethylacrylat, von besonderem Vorteil und werden deshalb erfindungsgemäß ganz besonders bevorzugt verwendet.

Beispiele geeigneter Ausgangsprodukte (a) für die Variante (ii) sind die Addukte
- der nachstehend beschriebenen Diisocyanate, vorzugsweise der linearen Diisocyanate, mit
- Verbindungen, die eine isocyanatereaktive Gruppe, vorzugsweise eine der vorstehend beschriebenen funktionellen Gruppen (e) oder (f), insbesondere eine Hydroxylgruppe, sowie mindestens eine der vorstehend beschriebenen Gruppen (a), insbesondere Acrylatgruppen, enthalten;
im Molverhältnis 0,8 : 1 bis 1,2 : 1, insbesondere 1 : 1.

Beispiele besonders gut geeigneter Ausgangsprodukte (a) für die Variante (ii) sind die Addukte von Hexamethylendiisocyanat oder Isophorondiisocyanat mit 2-Hydroxyethylacrylat im Molverhältnis 1 : 1.

Beispiele geeigneter Ausgangsprodukte (a) für die Variante (iii) sind die Umsetzungsprodukte der
- vorstehend beschriebenen Addukte im Molverhältnis 1 : 1 von Diisocyanaten und Verbindungen, die mindestens eine isocyanatreaktive Gruppe und mindestens eine Gruppe (a) enthalten, mit
- trifunktionellen Verbindungen, die mindestens eine, insbesondere drei isocyanatreaktive Gruppen, insbesondere Hydroxylgruppen, enthalten,
im Molverhältnis 1:1.

Beispiele gut geeigneter Umsetzungsprodukte dieser Art sind die Umsetzungsprodukte der Addukte von Hexamethylendiisocyanat oder Isophorondiisocyanat mit 2-Hydroxyethylacrylat im Molverhältnis 1 : 1 mit Trimethylolpropan im Molverhältnis 1:1.

Weitere Beispiele geeigneter Ausgangsprodukte (a) für die Variante (iii) sind die Umsetzungsprodukte von
- Triisocyanaten, insbesondere von Isocyanuraten der nachstehend beschriebenen Diisocyanate, mit
- Verbindungen, die eine isocyanatreaktive Gruppe (e) oder (f), insbesondere eine Hydroxylgruppe, sowie mindestens eine, insbesondere eine, der vorstehend beschriebenen Gruppen (a) enthalten,
im Molverhältnis 1 : 1.

Beispiele gut geeigneter Umsetzungsprodukte dieser Art sind die Umsetzungsprodukte der Isocyanurate von Hexamethylendiisocyanat oder Isophorondiisocyanat mit 2-Hydroxyethylacrylat im Molverhältnis 1 : 1.

Für den Einbau der chemisch gebundenen Photoinitiatoren und/oder Photocoinitiatoren (d) sowie der komplementären reaktiven funktionellen Gruppen (e) und (f) werden vorteilhafterweise Ausgangsprodukte (d), (e) und (f) verwendet, die die betreffenden Gruppen oder Reste sowie insbesondere Hydroxylgruppen oder Isocyanatgruppen enthalten.

Vorzugsweise werden die Varianten (i) und (ii) mit den entsprechenden Ausgangsprodukten (a) angewandt, wobei die Variante (i) bevorzugt wird. Hierbei ergeben sich weitere Vorteile, wenn die entsprechenden Ausgangsprodukte (a) bereits bei der Herstellung der Grundstruktur eingesetzt werden, weswegen diese Variante ganz besonders bevorzugt angewandt wird.

Ein besonders vorteilhafter erfindungsgemäßer Feststoff enthält neben den vorstehend beschriebenen Gruppen (a) sowie gegebenenfalls (c), (d), (e) und/oder (f) noch 0,01 bis 1,0 Mol-%, vorzugsweise 0,02 bis 0,9 Mol-%, bevorzugt 0,03 bis 0,85 Mol-%, besonders bevorzugt 0,04 bis 0,8 Mol-%, ganz besonders bevorzugt 0,05 bis 0,75 Mol-% und insbesondere 0,06 bis 0,7 Mol-%, jeweils bezogenen auf die in dem erfindungsgemäßen Feststoff vorhandenen Doppelbindungen, mindestens eines chemischen gebundenen Stabilisators (b).

Hierbei enthält der besonders vorteilhafte erfindungsgemäße Feststoff im statistischen Mittel mehr als eine, vorzugsweise mehr als 1,3, bevorzugt mehr als 1,5, besonders bevorzugt mehr als 1,6, ganz besonders bevorzugt mehr als 1,8 und insbesondere mehr als 2 Gruppe(n) (a) pro Molekül. Die angewandten Gruppen (a) sind gleich oder verschieden und in der vorstehend beschriebenen Weise an die Grundstruktur des erfindungsgemäßen Feststoffs gebunden.

Bei dem chemisch gebundenen Stabilisator (b) handelt es sich um Verbindungen, die sterische gehinderte Nitroxylradikale (>N-O•) sind oder liefern, die im modifizierten Denisov-Zyklus freie Radikale abfangen.

Beispiele geeigneter chemisch gebundener Stabilisatoren (b) sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist. Ergänzend wird auf das Lehrbuch »Lackadditive« von Johan Bieleman, Wiley-VCH, Weinheim, New York, 1998, Seiten 293 bis 295, verwiesen.

Beispiele geeigneter Ausgangsprodukte (b) für die Einführung der chemisch gebundenen Stabilisatoren (b) sind HALS-Verbindungen, vorzugsweise 2,2,6,6-Tetraalkylpiperidinderivate, insbesondere 2,2,6,6-Tetramethylpiperidinderivate, deren Stickstoffatom mit einem Sauerstoffatom, einer Alkylgruppe, Alkylcarbonylgruppe oder Alkylethergruppe substituiert ist und die eine Isocyanatgruppe oder eine isocyanatreaktive funktionelle Gruppe (e) oder (f), insbesondere eine Hydroxylgruppe, enthalten. Ein Beispiel für ein besonders gut geeignetes Ausgangsprodukt (b) ist das Nitroxylradikal 2,2,6,6-Tetramethyl-4-hydroxy-piperidin-N-oxid.

Der besonders vorteilhafte erfindungsgemäße Feststoff kann aus den vorstehend beschriebenen Ausgangsprodukten (a), (b) und den Ausgangsprodukten für die Grundstruktur sowie gegebenenfalls den Ausgangsprodukten (c), (d), (e) und/oder (f) in üblicher und bekannter Weise in Lösung hergestellt werden. Es ist indes ein weiterer besonderer Vorteil des besonders vorteilhaften erfindungsgemäßen Feststoffs, daß er in der Schmelze ohne Probleme hergestellt werden kann, so daß die Entsorgung organischer Lösemittel entfallen kann.

Der erfindungsgemäße Feststoff ist amorph, teilkristallin oder kristallin. Vorzugsweise ist er teilkristallin oder kristallin, weil er hierdurch schon bei niedrigen Molekulargewichten, insbesondere im Oligomerbereich, speziell von 500 bis 5.000 Dalton, blockfest und gut mahlbar ist und eine niedrigviskose Schmelze ergibt. Des weiteren ist es von Vorteil, wenn der erfindungsgemäße Feststoff eine enge Molekulargewichtsverteilung aufweist, weil dies gleichfalls die Blockfestigkeit und die Schmelzeviskosität positiv beeinflußt. Die Einstellung des Kristallinitätsgrads und der Molekulargewichtsverteilung kann nach üblichen und bekannten Methoden erfolgen, so daß sie der Fachmann in einfacher Weise gegebenenfalls unter Zuhilfenahme einfacher Vorversuche vornehmen kann.

Vorzugsweise hat der erfindungsgemäße Feststoff ein Schmelzintervall oder einen Schmelzpunkt im Temperaturbereich von 40 bis 130°C. Bevorzugt liegt die Schmelzeviskosität des erfindungsgemäßen Feststoffs bei 130°C bei 50 bis 20.000 mPas.

Der erfindungsgemäßer Feststoff kann als Klebstoff oder Dichtungsmasse oder zur Herstellung von Klebstoffen und Dichtungsmassen verwendet werden. Die betreffenden erfindungsgemäßen Klebstoffe und Dichtungsmassen enthalten dann mindestens ein Additiv in wirksamen Mengen, wie es auf dem Gebiet der Schmelzkleber und der Dichtungsmassen üblicherweise verwendet wird.

Vorteilhafterweise wird der erfindungsgemäße Feststoff als Beschichtungsstoff oder zur Herstellung von Beschichtungsstoffen, vorzugsweise festen Beschichtungsstoffen und insbesondere Pulverlacken angewandt.

Demnach ist der erfindungsgemäße Feststoff in dem erfindungsgemäßen Pulverlack vorzugsweise in einer Menge von 50 bis 100, bevorzugt 50 bis 98, besonders bevorzugt 55 bis 95, ganz besonders bevorzugt 55 bis 90 Gew.-%, jeweils bezogen auf den erfindungsgemäßen Pulverlack, enthalten.

Die erfindungsgemäßen Pulverlacke auf der Basis mindestens eines erfindungsgemäßen Feststoffs sind thermisch und/oder mit aktinischer Strahlung härtbar. Bei der Kombination von thermischer Härtung und Härtung mit aktinischer Strahlung spricht man auch von Dual Cure.

Die Zusammensetzung der erfindungsgemäßen Pulverlacke kann außerordentlich breit variiert werden, was ein ganz wesentlicher Vorteil ist. Hierbei richtet sich die Zusammensetzung zum einen nach der Härtungsmethode oder den Härtungsmethoden, die angewandt werden soll(en), und zum anderen nach dem Verwendungszweck der Pulverlacke (pigmentfreier Klarlack oder pigmenthaltiger farb- und/oder effektgebender Lack).

Beispiele geeigneter weiterer Bestandteile zur Verwendung in den erfindungsgemäßen Pulverlacken sind Oligomere und/oder Polymere, die thermisch und/oder mit aktinischer Strahlung härtbar sind und eine Glasübergangstemperatur Tg von über 40°C aufweisen, wie thermisch härtbare und/oder mit aktinischer Strahlung härtbare lineare und/oder verzweigte und/oder blockartig, kammartig und/oder statistisch aufgebaute Poly(meth)acrylate oder Acrylatcopolymerisate, Polyester, Alkyde, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe oder mit aktinischer Strahlung härtbare (meth)acrylfunktionelle (Meth)Acrylatcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate, insbesondere aber Polyester.

Vorteilhafterweise werden hierbei feste amorphe, teilkristalline und/oder kristalline Polyester verwendet, die terminale Gruppen enthalten, die vom Addukt von Dicyclopentadien und Maleinsäureanhydrid im Molverhältnis 1 : 1 gebildet werden, und/oder kettenständige Endomethylentetrahydrophthalsäuregruppen enthalten. Die Herstellung dieser Polyester ist üblich und bekannt und kann unter Verwendung der vorstehend bei der Herstellung der Polyester-Polyurethane beschriebenen Ausgangsprodukte durchgeführt werden. Wenn sie mit verwendet werden, sind sie in den erfindungsgemäßen Pulverlacken in einer Menge von, bezogen auf den Pulverlack, 2,0 bis 50, vorzugsweise 5,0 bis 45, bevorzugt 10 bis 45, besonders bevorzugt 15 bis 40, ganz besonders bevorzugt 15 bis 38 und insbesondere 15 bis 35 Gew.% enthalten.

Darüber hinaus können die erfindungsgemäßen Pulverlacke noch lackübliche Additive enthalten. Beispiele geeigneter lacküblicher Additive zur Verwendung in den erfindungsgemäßen Pulverlacken sind
- übliche und bekannte thermisch und/oder mit aktinischer Strahlung härtbare Reaktiverdünner wie stellungsisomere Diethyloctandiole oder Hydroxylgruppen enthaltende hyperverzweigte Verbindungen oder Dendrimere, di- oder höherfunktionelle (Meth)Acrylate wie Trimethylolpropan-tri(meth)acrylat, oder (Meth)Acrylatgruppen enthaltende Polyisocyanate;
- Vemetzungsmittel, die die vorstehend beschriebenen funktionellen Gruppen (e) und/oder (f) enthalten, wie Aminoplastharze, Anhydridgruppen enthaltende Verbindungen oder Harze, Epoxidgruppen enthaltende Verbindungen oder Harze, Tris(alkoxycarbonylamino)triazine, Carbonatgruppen enthaltende Verbindungen oder Harze, blockierte und/oder unblockierte Polyisocyanate, beta-Hydroxyalkylamide sowie Verbindungen mit im Mittel mindestens zwei zur Umesterung befähigten Gruppen, beispeilsweise Umsetzungsprodukte von Malonsäurediestern und Polyisocyanaten oder von Estern und Teilestern mehrwertiger Alkohole der Malonsäure mit Monoisocyanaten, wie sie in der europäischen Patentschrift EP-A-0 596 460 beschrieben werden;
- UV-Absorber;
- Lichtschutzmittel wie HALS-Verbindungen, Benztriazole oder Oxalanilide;
- Radikalfänger;
- thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether;
- Katalysatoren für die Vernetzung wie Dibutylzinndilaurat, Lithiumdecanoat oder Zinkoctoat;
- Entlüftungsmittel wie Diazadicycloundecan oder Benzoin;
- chemisch nicht gebundene Photoinitiatoren wie solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon Lacke und Druckfarben, Georg Thieme Verlag Stuttgart, 1998, Seiten 444 bis 446, verwiesen), insbeondere Benzophenone, Benzoine oder Benzoinether oder Phosphinoxide;
- Slipadditive;
- Polymerisationsinhibitoren;
- Haflvermittler wie Tricyclodecandimethanol;
- Verlaufmittel;
- transparente Füllstoffe auf der Basis von Siliziumdioxid, Aluminiumoxid, Titandioxid oder Zirkoniumoxid; ergänzend wird noch auf das Römpp Lexikon Lacke und Druckfarben, Georg Thieme Verlag, Stuttgart, 1998, Seiten 250 bis 252, verwiesen;
- Flammschutzmittel;
- Mattierungsmittel wie Magnesiumstearat;
- elektrisch leitfähige Pigmente, wie Metallpigmente, Leitfähigkeitsruße, dotierte Perlglanzpigmente oder leitfähiges Bariumsulfat. Besonders gut geeignete elektrisch leitfähige Pigmente sind die Leitfähigkeitsruße; ergänzend wird auf Römpp Lexikon Lacke und Druckfarben, Georg Thieme Verlag, Stuttgart, New York, 1998, »Metallpigmente«, S. 381, und »Leitfähige Pigmente«, S. 354, verwiesen;
- Effektpigmente, wie Metallplättchenpigmente wie handelsübliche Aluminiumbronzen, gemäß DE-A-36 36 183 chromatierte Aluminiumbronzen und handelsübliche Edelstahlbronzen, sowie nichtmetallische Effektpigmente wie zum Beispiel Perlglanz- bzw. Interferenzpigmente; ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, verwiesen;
- anorganische farbgebende Pigmente wie Titandioxid, Eisenoxide, Sicotransgelb und Ruß oder organische farbgebende Pigmente wie Thioindigopigmente Indanthrenblau, Cromophthalrot, Irgazinorange und Heliogengrün; ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »ThioindigoPigmente« und Seite 567 »Titandioxid-Pigmente« verwiesen, oder
- organische und anorganische Füllstoffe wie Kreide, Calciumsulfate, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl; ergänzend wird auf Römpp Lexikon Lacke und Druckfarben, Georg Thieme Verlag, 1998, Seiten 250 ff., »Füllstoffe«, verwiesen.

Weitere Beispiele geeigneter Lackadditive werden in dem Lehrbuch »Lackadditive« von Johan Bieleman, Wiley-VCH, Weinheim, New York, 1998, beschrieben.

Diese Additive werden den erfindungsgemäßen Pulverlacken in üblichen und bekannten, wirksamen Mengen zugesetzt, welche je nach Additiv bei 0,001 bis 500 Gewichtsteilen pro 100 Gewichtsteilen an erfindungsgemäßem Feststoff liegen können.

Die Herstellung der erfindungsgemäßen Pulverlacke weist keine methodischen Besonderheiten auf, sondern erfolgt in üblicher und bekannter Weise vorzugsweise durch Vermischen der Bestandteile in der Schmelze, durch Extrusion oder Kneten, Austragen der Schmelze aus dem Mischaggregat, Verfestigen der resultierenden homogenisierten Masse, Zerkleinern der Masse, bis die gewünschte Korngröße resultiert, sowie gegebenenfalls Sichten des resultierenden erfindungsgemäßen Pulverlacks unter Bedingungen, unter denen keine vorzeitige thermische Vernetzung und/oder Vernetzung mit aktinischer Strahlung und/oder sonstigen Schädigungen einzelner Bestandteile des erfindungsgemäßen Pulverlacks beispielsweise durch thermischen Abbau eintreten.

Hierbei erweist es sich als weiterer besonderer Vorteil des erfindungsgemäßen Pulverlacks, daß er in Wasser dispergiert werden kann, wodurch ein erfindungsgemäßer Pulverslurry-Lack resultiert.

Auch die Applikation des erfindungsgemäßen Pulverlacks weist keine methodischen Besonderheiten auf, sondern erfolgt mit Hilfe üblicher und bekannter Verfahren und Vorrichtungen beispielsweise durch elektrostatisches Versprühen, wobei auch hier Bedingungen angewandt werden, unter denen keine vorzeitige thermische Vernetzung und/oder Vernetzung mit aktinischer Strahlung und/oder sonstigen Schädigungen einzelner Bestandteile des erfindungsgemäßen Pulverlacks beispielsweise durch thermischen Abbau eintreten.

Der erfindungsgemäße Pulverslurry-Lack dagegen kann mit Hilfe von Verfahren und Vorrichtungen appliziert werden, wie sie üblicherweise für die Applikation von Spritzlacken angewandt werden.

Der erfindungsgemäße Pulverlack und der erfindungsgemäße Pulverslurry-Lack kann in den unterschiedlichsten Schichtdicken appliziert werden, so daß Beschichtungen der unterschiedlichsten Stärke, insbesondere von 10 bis 250µm, resultieren. Die Stärke der Beschichtungen richtet sich nach dem Verwendungszweck der Beschichtungen und kann daher vom Fachmann ohne weiteres eingestellt werden.

Auch die Härtung der applizierten Pulverlackschichten weist keine methodischen Besonderheiten auf, sondern es werden die üblichen und bekannten Verfahren und Vorrichtungen angewandt.

So kann die Härtung mit aktinischer Strahlung mit elektromagnetischer Strahlung wie Röntgenstrahlung, UV-Strahlung, sichtbares Licht oder nahes IR-Licht (NIR) oder mit Korpuskularstrahlung wie Elektronenstrahlen durchgeführt werden. Verfahren und Vorrichtungen für die Härtung mit aktinischer Strahlung sind üblich und bekannt und werden beispielsweise in R. Holmes, »U.V. and E.B. Curing Formulations for Printing Inks«, Coatings and Paints, SITA Technology, Academic Press, London, United Kindom 1984, beschrieben.

Die thermische Härtung weist ebenfalls keine methodischen Besonderheiten auf, sondern erfolgt nach den üblichen und bekannten Methoden wie Erhitzen in einem Umluftofen oder Bestrahlen mit IR-Lampen.

Als Substrate kommen alle zu lackierenden Oberflächen von Gegenständen in Betracht, die einer Härtung der hierauf befindlichen Lackschichten unter Anwendung von Hitze und/oder aktinischer Strahlung zugänglich sind, das sind z. B. Gegenstände aus Metallen, Kunststoffen, Holz, Keramik, Stein, Textil, Faserverbunden, Leder, Glas, Glasfasern, Glas- und Steinwolle oder mineral- und harzgebundene Baustoffen, wie Gips- und Zementplatten oder Dachziegel. Demnach ist der erfindungsgemäße Pulverlack oder Pulverslurry-Lack, insbesondere als Klarlack, für Anwendungen in der Automobillackierung, der Lackierung von Möbeln und der industriellen Lackierung, inklusive Coil Coating, Container Coating und die Beschichtung elektrischer Bauteile, in Mit hohem Maße geeignet. Im Rahmen der industriellen Lackierungen eignet er sich für die Lackierung praktisch aller Teile für den privaten oder industriellen Gebrauch wie Radiatoren, Haushaltsgeräte, Kleinteile aus Metall, Radkappen, Felgen oder Wicklungen von elektrischen Motoren.

Insbesondere ist die erfindungsgemäße Klarlackierung als Überzug von Basislacken geeignet, vorzugsweise in der Automobilindustrie. Besonders geeignet ist sie als Klarlackierung über Wasserbasislacken auf Basis von Polyestern, Polyurethanharzen und Aminoplastharzen.

Die hierbei angewandten metallischen Substrate können eine Grundierung, insbesondere eine kathodisch oder anodische abgeschiedene und thermisch gehärtete Elektrotauchlackierung aufweisen. Gegebenenfalls kann die Elektrotauchlackierung noch mit einer Steinschlagschutzgrundierung oder einem Füller beschichtet sein.

Mit dem erfindungsgemäßen Pulverlack und Pulverslurry-Lack können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung mit einem Plasma oder mit Beflammen unterzogen und/oder mit einer Hydrogrundierung aus einem Hydroprimer beschichtet werden.

Besondere Vorteile resultieren, wenn die erfindungsgemäßen Klebschichten, Dichtungen und Beschichtungen mit Hilfe des erfindungsgemäßen Verfahrens hergestellt werden.

Zu diesem Zweck wird
(1) mindestens ein erfindungsgemäßer Beschichtungsstoff und/oder Klebstoff und/oder mindestens eine erfindungsgemäße Dichtungsmasse in der Form
   (1.1) einer Schmelze,
   (1.2) eines Pulvers,
   (1.3) einer Pulversluny oder
   (1.4) einer Dispersion oder einer Lösung in mindestens einem organischen Lösemittel
   auf das vorstehend beschriebene grundierte oder ungrundierte Substrat appliziert,
(2) die resultierende Pulverslurry-Schicht (1.3) oder die resultierende Schicht aus einer Dispersion oder einer Lösung (1.4) getrocknet oder die resultierende Schicht der Schmelze (1.1) erstarren gelassen oder durch Erhitzen weiterhin in geschmolzenem Zustand gehalten,
(3) die resultierende feste Schicht (1.2), (1.3) oder (1.4) durch Erhitzen aufgeschmolzen und
(4) die im Verfahrenschritt (2) oder (3) resultierende geschmolzene Schicht
   (4.1) im geschmolzenen Zustand,
   (4.2) beim Erstarren und/oder
   (4.3) nach dem Erstarren
mit aktinischer Strahlung gehärtet.

Zusätzlich zur Härtung mit aktinischer Strahlung kann bei entsprechender Zusammensetzung der Beschichtungsstoffe, Dichtungsmassen und Klebstoffe noch die thermische Härtung vor, während oder nach dem Verfahrensschritt (4) durchgeführt werden.

Die aus dem erfindungsgemäßen Klebstoffen und Dichtungsmassen hergestellten Klebschichten und Dichtungen haben auch unter extremen klimatischen Bedingungen eine hervorragende Klebkraft und Dichtungsfähigkeit auch über lange Zeiträume hinweg.

Die aus den erfindungsgemäßen Pulverlacken und Pulverslurry-Lacken hergestellten erfindungsgemäßen Beschichtungen weisen einen hervorragenden Verlauf und einen hervorragenden optischen Gesamteindruck auf. Sie sind witterungsstabil und vergilben auch im tropischen Klima nicht. Sie sind daher für zahlreiche Anwendungszwecke im Innen- und Außenbereich verwendbar. Daher weisen auch grundierte und ungrundierte Substrate, insbesondere Karosserien von Automobilen und Nutzfahrzeugen, industrielle Bauteile, inklusive Kunstsstoffteile, Emballagen, Coils und elektrische Bauteile, oder Möbel, die mit mindestens einer erfindungsgemäßen Beschichtung beschichtet sind, besondere technische und wirtschaftliche Vorteile, insbesondere eine lange Gebrauchsdauer auf, was sie für die Anwender besonders attraktiv macht.

### Beispiele und Vergleichsversuche

### Herstellbeispiel 1

### Die Herstellung eines Adduktes von Dicyclopentadien und Maleinsäureanhydrid

In einem Rührkolben mit Heizung und Rückflußkühler wurden 661,10 g Dicyclopentadien (5,0 Mol) und 490,30 g Maleinsäureanhydrid (5,0 Mol) eingewogen. Die Reaktionsmischung wurde unter einem leichten Stickstoffstrom auf 125°C erhitzt, wonach über einen Tropftrichter während einer Stunde 95,00 g Wasser (5,0 Mol + 5 g) zugegeben wurden. Es wurde bei 125°C noch eine Stunde nachreagieren gelassen. Es resultierte die Monocarbonsäure

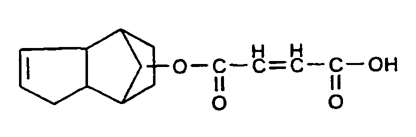

### Herstellbeispiel 2

### Die Herstellung eines ungesättigten Polyesters zur Verwendung in den erfindungsgemißen Pulverlacken

In einem Rührkolben mit Heizung und Destillieraufsatz wurden

| | |
|---|---|
| 240,00 g | Perhydriertes Bisphenol A (1 Mol), |
| 236,00 g | Hexandiol 1,6 (2 Mol), |
| 194,00 g | Dimethylterephthalat (1 Mol) und |
| 0,67 g | Zinnacetat |

eingewogen. Die resultierende Mischung wurde unter einem leichten Stickstoffstrom rasch auf 120°C aufgeheizt. Dann wurde während 3 Stunden die Temperatur stufenweise auf 190°C erhöht, wobei das entstehende Kondensationswasser abdestilliert wurde. Hiernach wurde der Kolbeninhalt auf 90°C abgekühlt und es wurden zu der Reaktionsmischung

| | |
|---|---|
| 516,80 g | Addukt gemäß Herstellbeispiel 1 (2 Mol), |
| 116,00 g | Fumarsäure (1 Mol), |
| 4,00 g | Dibutylzinndilaurat und |
| 0,50 g | Hydrochinon |

hinzugegeben. Die resultierende Reaktionsmischung wurde unter einem leichten Stickstoffstrom rasch auf 130°C aufgeheizt. Dann wurde während 6 Stunden ihre Temperatur allmählich auf 190°C erhöht, wobei das entstehende Kondensationswasser abdestilliert wurde. Es wurde ein Harz mit einer Säurezahl von 17 erhalten, das beim Abkühlen erstarrt und nach dem Mahlen nicht verbackende Pulver ergibt.

### Herstellbeispiel 3

### Die Herstellung eines erfindungsgemäßen Feststoffs zur Verwendung in den erfindungsgemäßen Pulverlacken

In einem geeigneten Reaktionsgefäß, ausgestattet mit Rührer, Rückflußkühler, Heizung und Inertgaszufuhr wurden

| | |
|---|---|
| 14,76 g | Trimethylolpropan, |
| 236,36 g | Hexandiol 1,6, |
| 197,2 g | Hydroxyethylacrylat und |
| 0,56 g | 2,2,6,6-Tetramethyl-4-hydroxy-pipecidin-N-oxid. |

vorgelegt und auf 60°C erhitzt. Zur Vorlage während einer Stunde 666 g Isophorondiisocyanat (IPDI) und 1,1g Dibutylzinndilaurat zudosiert. Durch die exotherme Reaktion stieg die Temperatur langsam bis auf 100°C. Man ließ die resultierende Reaktionsmischung noch während 30 Minuten bei 100°C nachreagieren, so daß keine freien Isocyanatgruppen mehr nachweisbar waren. Die Schmelze wurde auf eine Aluminiumfolie ausgegossen und abkühlen gelassen. Es resultierte ein hartes, gut mahlbares Harz. Angaben über die Schmelzeviskosität und -stabilität finden sich in der Tabelle 1.

### Herstellbeispiel 4

### Die Herstellung eines nicht erfindungsgemäßen Feststoffs zur Verwendung in einem nicht erfindungsgemäßen Pulverlack

Das erfindungsgemäße Herstellbeispiel 3 wurde wiederholt, nur daß keine chemisch gebundene HALS-Verbindung verwendet wurde. Angaben über die Schmelzeviskosität und-stabilität finden sich in der Tabelle 1.

### Herstellbeispiel 5

### Die Herstellung eines erfindungsgemäßen Feststoffs zur Verwendung in den erfindungsgemäßen Pulverlacken

Das erfindungsgemäße Herstellbeispiel 3 wurde wiederholt, nur daß anstelle der dort verwendeten Ausgangsprodukte die folgenden Ausgangsprodukte eingesetzt wurden:
Vorlage:

| | |
|---|---|
| 62 g | Ethylenglykol (1 Mol), |
| 45 g | Butandiol 1,4 (0,5 Mol), |
| 232 g | Hydroxyethylacrylat (2 Mol) und |
| 0,4 g | 2,2,6,6-Tetramethyl-4-hydroxy-piperidin-N-oxid. |

Zulauf:

| | |
|---|---|
| 420,5 g | Hexamethylendüsocyanat (2,5 Mol) und |
| 1 g | Dibutylzinndilaurat. |

Angaben über die Schmelzeviskosität und -stabilität finden sich in der Tabelle 1.

### Herstellbeispiel 6

### Die Herstellung eines nicht erfindungsgemäßen Feststoffs zur Verwendung in nicht erfindungsgemäßen Pulverlacken

Das erfindungsgemäße Herstellbeispiel 5 wurde wiederholt, nur daß keine chemisch gebundene HALS-Verbindung verwendet wurde. Angaben über die Schmelzeviskosität und -stabilität finden sich in der Tabelle 1.

### Herstellbeispiel 7

### Die Herstellung eines erfindungsgemäßen Feststoffs zur Verwendung in den erfindungsgemäßen Pulverlacken

Das erfindungsgemäße Herstellbeispiel 3 wurde wiederholt, nur daß anstelle der dort verwendeten Ausgangsprodukte die folgenden Ausgangsprodukte eingesetzt wurden:
Vorlage:

| | |
|---|---|
| 66,2 g | Ethylenglykol, |
| 146,6 g | Polycaprolakton (Capa® 200Der Firma Solvay Interox), |
| 154,66 g | Hydroxyethylacrylat und |
| 0,4 g | 2,2,6,6-Tetramethyl-4-hydroxy-piperidin-N-oxid. |

Zulauf:

| | |
|---|---|
| 444 g | Isophorondiisocyanat und |
| 0,8 g | Dibutylzinndilaurat. |

Angaben über die Schmelzeviskosität und -stabilität finden sich in der Tabelle 1.

### Herstellbeispiel 8

### Die Herstellung eines nicht erfindungsgemäßen Feststoffs zur Verwendung in nicht erfindungsgemäßen Pulverlacken .

Das erfindungsgemäße Herstellbeispiel 7 wurde wiederholt, nur daß keine chemisch gebundene HALS-Verbindung verwendet wurde. Angaben über die Schmelzeviskosität und -stabilität finden sich in der Tabelle 1.

**Tabelle 1:**

| **Die Schmelzeviskosität und die Schmelzestabilität der erfindungsgemäßen (Herstellbeispiele 3, 5 und 7) und der nicht erfindungsgemäßen (Herstellbeispiele 4, 6 und 8) Feststoffe** | | | | | | |
|---|---|---|---|---|---|---|
| **Herstellbeispiel** | **3** | **4** | **5** | **6** | **7** | **8** |
| **Schmelzeviskosität:** | | | | | | |
| [mPas/120°C] | 11200 | 12300 | 750 | 810 | 3210 | 3400 |
| [mPas/130°C] | 7050 | 8200 | 410 | 460 | 3120 | 2200 |

| **Schmelzestabilität:** | | | | | | |
|---|---|---|---|---|---|---|
| [Min./130°C] | > 60 | ca.12 | > 60 | ca. 4 | > 60 | ca. 6 |
| [Min./140°C] | > 60 | ca. 4 | > 60 | ca. 2 | > 60 | ca. 3 |

Die erfmdungsgemäßen und nicht erfindungsgemäßen Feststoffe wurden mit einem Physica Rheometer mit Platte/Platte-System charakterisiert. Die Schmelzestabilität ist die Zeit bis zur Verdreifachung der Schmelzeviskosität. Der Vergleich der Werte in der Tabelle 1 belegt, daß die erfindungsgemäßen Feststoffe in der Schmelze eindeutig stabiler waren als die nicht erfindungsgemäßen.

### Beispiele 1 bis 6 und Vergleichsversuche V1 bis V6

### Die Herstellung und Prüfung der erfindungsgemäßen (Beispiele 1 bis 6) und der nicht erfindungsgemäßen (Vergleichsversuche V1 bis V6) Pulverlackierungen

Für die Beispiele 1 und 2 wurde der erfindungsgemäße Feststoff des Herstellbeispiels 3 verwendet.

Für die Beispiele 3 und 4 wurde der erfindungsgemäße Feststoff des Herstellbeispiels 5 verwendet.

Für die Beispiele 5 und 6 wurde der erfindungsgemäße Feststoff des Herstellbeispiels 7 verwendet.

Für die Vergleichsversuche V1 und V2 wurde der nicht erfindungsgemäße Feststoff des Herstellbeispiels 4 verwendet.

Für die Vergleichsversuche V3 und V4 wurde der nicht erfindungsgemäße Feststoff des Herstellbeispiels 6 verwendet.

Für die Vergleichsversuche V5 und V6 wurde der nicht erfindungsgemäße Feststoff des Herstellbeispiels 8 verwendet.

Allen erfindungsgemäßen und nicht erfindungsgemäßen Pulverlacken wurden, bezogen auf den jeweiligen Pulverlack, 3 Gew.% Darocure® 2959 (Photoinitiator), 0,5 Gew.-% Modaflow® (Verlaufshilfsmittel), 1 Gew.-% Benzoin (Entgasungshilfsmittel) zugesetzt. Des weiteren wurde in allen Pulverlacken der olefinisch ungesättigte Polyester gemäß Herstellbeispiel 2 in den in der Tabelle 3 angegebenen Mengenverhältnissen angewandt.

Die erfindungsgemäßen und die nicht erfindungsgemäßen Pulverlackierungen wurden nach der folgenden allgemeinen Vorschrift hergestellt:
Die jeweilige Pulverlackzusammensetzung wurde im Ölbad bei 140°C geschmolzen, auf ein Aluminiumblech ausgegossen, nach dem Erstarren gemahlen und auf ein entfettetes Stahlblech aufgesiebt, so, daß eine ca. 70 µm dicke Lackschicht resultierte. Die aufgesiebte Pulverlackschicht wurde auf einer geregelten Heizplatte bei 140°C während 5 Minuten aufgeschmolzen. Über der Heizplatte war in 30 cm Abstand eine Quecksilberdampflampe mit einem Emissionsmaximum bei ca. 360 nm (Hönle LTV 400) angebracht, die mit einer Schiebeblende verschlossen war. Nachdem die Pulverlackschicht geschmolzen war, wurde die Schiebeblende geöffnet und die Schmelze 30 Sekunden belichtet. Danach wurde die Blende wieder geschlossen, und das Blech wurde von der Heizplatte genommen. Die Prüfung der Pulverlackierung erfolgte nach 24stündiger Lagerung bei Raumtemperatur.

Die Tabelle 3 gibt eine Übersicht über die Mengenverhältnisse von erfindungsgemäßem oder nicht erfindungsgemäßem Feststoff zu olefinisch ungesättigtem Polyester gemäß Herstellbeispiel 2, die durchgeführten Prüfungen und die hierbei erhaltenen Ergebnisse.

**Tabelle 3:**

| **Anwendungstechnische Eigenschaften der erfindungsgemäßen (Beispiele 3, 5 und 7) und der nicht erfindungsgemäßen (Vergleichsversuch V4,V6 und V8) Pulverlackierungen** | | | | | | | |
|---|---|---|---|---|---|---|---|
| Beispiel/ Vergleichsversuch Nr. | Verhältnis Polyester/Feststoff (Gewichtsteile) | Verlauf visuell (Note^{a)}) | Erichsen- Wert ^{b)} ) | Gitterschnitt (Note^{c)} | Pendelhärte^{d)} (s) | Bleistifthärte | MEK^{e)} |
| 1 | 20/80 | 2 | 7,2 | GT2 | 187 | 4H | 0 |
| 2 | 30/70 | 2 | 6,4 | GT1 | 194 | 5H | 0 |
| V1 | 20/80 | 3 | 6,9 | GT2 | 191 | 4H | 0 |
| V2 | 30/70 | vernetzt beim Schmelzen im Reagenzglas | | | | | |
| | | | | | | | |
| 3 | 20/80 | 2 | 3,6 | GT2 | 181 | 5H | 0 |
| 4 | 30/70 | 2 | 2,8 | GT3 | 193 | 5H | 0 |
| V3 | 20/80 | vernetzt beim Schmelzen im Reagenzglas | | | | | |
| V4 | 30/70 | 4 | 3,5 | GT3 | 192 | 5H | 0 |
| | | | | | | | |
| 5 | 20/80 | 1 | 8,4 | GT0 | 161 | 3H | 0 |
| 6 | 30/70 | 1 | 7,6 | GT0 | 177 | 4H | 0 |
| V5 | 20/80 | 1 | 8,2 | GT0 | 168 | 3H | 0 |
| V6 | 30/70 | 2 | 5,7 | GT1 | 184 | 4H | 0 |

| | | | | | | | |
|---|---|---|---|---|---|---|---|
| a) Benotung: 1 = sehr gut; 2 = gut; 3 = gerade noch brauchbar; 4 = für hohe Qualitätsansprüche nicht mehr ausreichend; | | | | | | | |
| b) Erichsen-Tiefung gemäß DIN EN ISO 1520: 1995-04; | | | | | | | |
| c) Gitterschnittprüfung nach DIN ISO 2409:1994-10; | | | | | | | |
| d) Pendeldämpfungsprüfung nach DIN 53157: 1987-01; | | | | | | | |
| e) 60 Doppelhübe mit einem mit Methylethylketon getränkten Wattebausch; | | | | | | | |

Der Vergleich der Ergebnisse in der Tabelle 3 zeigt, daß die erfindungsgemäßen Pulverlacke den herkömmlichen in der Schmelzestabilität und im Verlauf überlegen waren.

Soweit die herkömmlichen Pulverlackierungen überhaupt herstellbar waren, waren sie den erfindungsgemäßen Pulverlackierungen in der Verformbarkeit überwiegend unterlegen. Außerdem wiesen sie, bedingt durch den schlechteren Verlauf, eine geringere Oberflächenqualität und damit einen schlechteren optischen Gesamteindruck auf.

## Patentansprüche

1. Feststoff, enthaltend
(a) Im statistischen Mittel mehr als eine Gruppe mit mindestens einer Kohlenstoff-Kohlenstoff-Doppelbindung pro Molekül, wobei die Gruppen strukturell voneinander verschieden oder gleich und über Urethangruppen an die Grundstruktur des Feststoffs gebunden sind, und
(b) 0,01 bis 1 Mol-%, bezogen auf die vorhandenen Doppelbindungen, mindestens eines chemisch gebundenen Stabilisators, herstellbar durch Umsetzung der Ausgangsprodukte in der Schmelze.

2. Der Feststoff nach Anspruch 1, **dadurch gekennzeichnet, daß** als Ausgangsprodukt für die Einführung des chemisch gebundenen Polymerisationsinhibitors (b) mindestens eine HALS-Verbindung mit mindestens einer isocyanatreaktiven Gruppe verwendet wird.

3. Der Feststoff nach Anspruch 1 oder 2, **dadurch gekennzeichnet, daß** die Gruppen (a) ausgewählt werden aus der Gruppe, enthaltend (Meth)acrylat-, Ethacrylat-, Crotonat-, Cinnamat-, Vinylether-, Vinylester-, Dicyclopentadienyl-, Norbornenyl-, Isoprenyl-, Isoprenyl-, Isopropenyl-, Allyl- oder Butenylgruppen; Dicyclopentadienyl-, Norbornenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen.

4. Der Feststoff nach Anspruch 3, **dadurch gekennzeichnet, daß** er mindestens eine (Meth)acrylatgruppe, insbesondere eine Acrylatgruppe, und mindestens eine Gruppe (a), ausgewählt aus der Gruppe, enthaltend Ethacrylat-, Crotonat-, Cinnamat-, Vinylether-, Vinylester-, Dicyclopentadienyl-, Norbornenyl-, Isoprenyl-, Isopropenyl-, Allyl- und Butenylgruppen; Isoprenyl-, Isopropenyl-, Allyl- und Butenylethergruppen sowie Isoprenyl-, Isopropenyl-, Allyl- und Butenylestergruppen enthält.

5. Der Feststoff nach einem der Ansprüche 1 bis 4, **dadurch gekennzeichnet, daß** er chemisch gebundene Photoinitiatoren und/oder Photocoinitiatoren enthält

6. Der Feststoff nach einem der Ansprüche 1 bis 5, **dadurch gekennzeichnet, daß** er funktionelle Gruppen (e) enthält, die mit Gruppen (e) der eigenen Art und/oder mit komplementären funktionellen Gruppen (f) thermische Vernetzungsreaktionen eingehen können.

7. Der Feststoff nach einem der Ansprüche 1 bis 6, **dadurch gekennzeichnet daß** er amorph, teilkristallin oder kristallin ist.

8. Der Feststoff nach einem der Ansprüche 1 bis 7, **dadurch gekennzeichnet, daß** er ein Schmelzintervall oder einen Schmelzpunkt im Temperaturbereich von 40 bis 130°C aufweist.

9. Der Feststoff nach einem der Ansprüche 1 bis 8, **dadurch gekennzeichnet, daß** er bei 130°C eine Schmelzeviskosität von 50 bis 20.000 mPas aufweist.

10. Der Feststoff nach einem der Ansprüche 1 bis 9, **dadurch gekennzeichnet, daß** seine Grundstruktur niedermolekular, oligomer und/oder polymer ist.

11. Der Feststoff nach Anspruch 10, **dadurch gekennzeichnet, daß** die oligomere und/oder polymere Grundstruktur olefinisch ungesättigte Doppelbindungen enthält.

12. Der Feststoff nach Anspruch 10 oder 11, **dadurch gekennzeichnet, daß** die oligomere und/oder polymere Grundstruktur sich von statistisch, alternierend und/oder blockartig aufgebauten, linearen, verzweigten, hypenverzweigten, dendrimeren und/oder kammartig aufgebauten Polyadditionsharzen, Polykondensationsharzen und/oder (Co)Polymerisaten von ethylenisch ungesättigten Monomeren ableitet.

13. Der Feststoff nach Anspruch 12, **dadurch gekennzeichnet, daß** die (Co)Polymerisate Poly(meth)acrylate und/oder partiell verseifte Polyvinylester und die Polyadditionsharze und/oder Polykondensationsharze Polyester, Alkyde, Polyurethane, Polyester-polyurethane, Polylactone, Polycarbonate, polyether, Polyether-Polyester, Epoxidharz-Amin-Addukte, Polyhamstoffe, Polyamide oder Polyimide, insbesondere Polyester, Polyester-Polyether, Polyurethane und Polyester-Polyurethane, sind.

14. Verwendung des Feststoffs gemäß einem der Anspreche 1 bis 13 als thermisch und/oder mit aktinischer Strahlung vernetzbarer Beschichtungsstoff, Klebstoff oder Dichtungsmasse oder zur Herstellung thermisch und/oder mit aktinischer Strahlung vernetzbarer Beschichtungsstoffe, Klebstoffe oder Dichtungsmassen.

15. Beschichtungsstoffe, Klebstoffe oder Dichtungsmassen, enthaltend mindestens einen Feststoff gemäß einem der Ansprüche 1 bis 13.

16. Beschichtungsstoffe, Klebstoffe oder Dichtungsmassen nach Anspruch 15, **dadurch gekennzeichnet, daß** hierin mindestens ein weiterer mit aktinischer Strahlung härtbarer Bestandteil enthalten ist.

17. Beschichtungsstoffe, Klebstoffe oder Dichtungsmassen nach Anspruch 16, **dadurch gekennzeichnet, daß** der weitere Bestandteil ausgewählt wird aus der Gruppe enthaltend, (meth)acrylfunktionelle (Meth)Acrylcopolymerisate, Polyetheracrylate, Polyesteracrylate, ungesättigte Polyester, Epoxyacrylate, Aminoacrylate, Melaminacrylate, Silikonacrylate und die entsprechenden Methacrylate.

18. Beschichtungsstoffe, Klebstoffe oder Dichtungsmassen nach Anspruch 17, **dadurch gekennzeichnet, daß** der ungesättigte Polyester ausgewählt wird aus der Gruppe, enthaltend amorphe, teilkristalline und kristalline feste Polyester mit mindestens einer terminalen Gruppe, die sich von dem Addukt von Dicyclopentadien und Maleinsäureanhydrid in Molverhältnis 1 : 1 ableitet, und/oder mindestens einer Endomethylentetrahydrophthalsäuregruppe.

19. Beschichtungsstoffe, Klebstoffe oder Dichtungsmassen nach einem der Ansprüche 15 bis 18, **dadurch gekennzeichnet, daß** hierin mindestens ein weiteres Additiv enthalten ist

20. Beschichtungsstoffe, Klebstoffe oder Dichtungsmassen nach einem der Ansprüche 15 bis 19, **dadurch gekennzeichnet, daß** sie als Pulver, Pulverslurries oder in organischen Lösemitteln gelöst oder dispergiert vorliegen.

21. Verwendung der Beschichtungsstoffe, Klebstoffe oder Dichtungsmassen gemäß einem der Ansprüche 15 bis 20 für die Herstellung von Beschichtungen, Klebschichten oder Dichtungen für grundierte oder ungrundierte Substrate.

22. Verfahren zur Herstellung von Beschichtungen, Klebschichten oder Dichtungen für grundierte oder ungrundierte Substrate, bei dem man
(1) mindestens einen Beschichtungsstoff und/oder Klebstoff und/oder mindestens eine Dichtungsmasse gemäß einem der Ansprüche 15 bis 20 in der Form
(1.1) einer Schmelze,
(1.2) eines Pulvers,
(1.3) einer Pulverslurry oder
(1.4) einer Dispersion oder einer Lösung in mindestens einem organischen lösemittel
auf das grundierte oder ungrundierte Substrat appliziert,
(2) die resultierende Pulverslurry-Schicht (1-3) oder die resultierende Schicht aus einer Dispersion oder einer Lösung (1.4) trocknet oder die resultierende Schicht der Schmelze (1.1) erstarren läßt oder durch Erhitzen weiterhin in geschmolzenem Zustand hält,
(3) die resultierende feste Schicht (1.2), (1.3) oder (1.4) durch Erhitzen aufschmilzt und
(4) die im Verfahrenschritt (2) oder (3) resultierende geschmolzene Schicht
(4.1) im geschmolzenen Zustand,
(4.2) beim Erstarren und/oder
(4.3) nach dem Erstarren
mit aktinischer Strahlung härtet.

23. Das Verfahren nach Anspruch 22, **dadurch gekennzeichnet, daß** man während oder nach dem Verfahrensschritt (4) die Schicht durch Erhitzen thermisch härtet.

24. Das Verfahren nach Anspruch 22 oder 23, **dadurch gekennzeichnet, daß** man mit nahem Infrarotlicht (NIR) erhitzt.

25. Beschichtungen, Klebschichten oder Dichtungen auf grundierten oder ungrundierten Substraten, herstellbar aus Beschichtungsstoffen, Klebstoffen oder Dichtungsmassen gemäß einem der Ansprüche 15 bis 20 und/oder herstellbar mit Hilfe des Verfahrens gemäß einem der Ansprüche 22 bis 24.

26. Grundierte und ungrundierte Substrate, insbesondere Karosserien von Automobilen und Nutzfahrzeugen, industrielle Bauteile, inklusive Kunstsstoffteile, Emballagen, Coils und elektrische Bauteile, oder Möbel, enthaltend mindestens eine Beschichtung, mindestens eine Klebschicht und/oder mindestens eine Dichtung gemäß Anspruch 25.

## Claims

1. A solid comprising
a) on average per molecule more than one group having at least one carbon carbon double bond, the groups being structurally different from one another or the same and being attached to the parent structure of the solid via urethane groups, and
b) from 0.01 to 1 mol%, based on the double bonds present of at least one chemically bonded stabilizer,
preparable by reacting the starting products in the melt.

2. The solid according to claim 1, **characterized in that** at least one HALS compound containing at least one isocyanate-reactive group is used as starting product for introducing the chemically bonded polymerization inhibitor (b).

3. The solid according to claim 1 or 2, **characterized in that** the groups (a) are selected from the group comprising (meth)acrylate, ethacrylate, crotonate, cinnamate, vinyl ether, vinyl ester, dicyclopentadienyl, norbornenyl, isoprenyl, isoprenyl, isopropenyl, allyl or butenyl groups; dicyclopentadienyl ether, norbornenyl ether, isoprenyl ether, isopropenyl ether, allyl ether or butenyl ether groups, or dicyclopentadienyl ester, norbornenyl ester, isoprenyl ester, isopropenyl ester, allyl ester or butenyl ester groups.

4. The solid according to claim 3, **characterized in that** it comprises at least one (meth)acrylate group, especially an acrylate group, and at least one group (a) selected from the group comprising ethacrylate, crotonate, cinnamate, vinyl ether, vinyl ester, dicyclopentadienyl, norbornenyl, isoprenyl, isopropenyl, allyl and butenyl groups; isoprenyl ether, isopropenyl ether, allyl ether and butenyl ether groups, and also isoprenyl ester, isopropenyl ester, allyl ester and butenyl ester groups.

5. The solid according to any of claims 1 to 4, **characterized in that** it comprises chemically bonded photoinitiators and/or photocoinitiators.

6. The solid according to any of claims 1 to 5, **characterized in that** it comprises functional groups (e) which are able to undergo thermal crosslinking reactions with groups (e) of their own kind and/or with complementary functional groups (f).

7. The solid according to any of claims 1 to 6, **characterized in that** it is amorphous, partly crystalline, or crystalline.

8. The solid according to any of claims 1 to 7, **characterized in that** it has a melting range or melting point in the temperature range from 40 to 130°C.

9. The solid according to any of claims 1 to 8, **characterized in that** it has a melt viscosity at 130°C of from 50 to 20 000 mPas.

10. The solid according to any of claims 1 to 9, **characterized in that** its parent structure is of low molecular mass, oligomeric and/or polymeric.

11. The solid according to claim 10, **characterized in that** the oligomeric and/or polymeric parent structure comprises olefinically unsaturated double bonds.

12. The solid according to claim 10 or 11, **characterized in that** the oligomeric and/or polymeric parent structure is derived from random, alternating and/or block, linear, branched, hyperbranched, dendrimeric and/or comb polyaddition resins, polycondensation resins and/or addition (co)polymers of ethylenically unsaturated monomers.

13. The solid according to claim 12, **characterized in that** the addition (co)polymers are poly-(meth)acrylates and/or partially hydrolyzed polyvinyl esters and the polyaddition resins and/or polycondensation resins are polyesters, alkyds, polyurethanes, polyester-polyurethanes, polylactones, polycarbonates, polyethers, polyether-polyesters, epoxy resin-amine adducts, polyureas, polyamides or polyimides, especially polyesters, polyester-polyethers, polyurethanes, and polyester-polyurethanes.

14. The use of the solid according to any of claims 1 to 13 as coating materials, adhesives or sealing compound which can be crosslinked thermally and/or with actinic radiation, or to prepare coating materials, adhesives or sealing compounds which can be crosslinked thermally and/or with actinic radiation.

15. Coating materials, adhesives or sealing compounds comprising at least one solid according to any of claims 1 to 13.

16. The coating materials, adhesives or sealing compounds according to claim 15, **characterized in that** at least one further constituent curable with actinic radiation is present therein.

17. The coating materials, adhesives or sealing compounds according to claim 16, **characterized in that** the further constituent is selected from the group comprising (meth)acryloyl-functional (meth)acrylic copolymers, polyether acrylates, polyester acrylates, unsaturated polyesters, epoxy acrylates, amino acrylates, melamine acrylates, silicone acrylates, and the corresponding methacrylates.

18. The coating materials, adhesives or sealing compounds according to claim 17, **characterized in that** the unsaturated polyester is selected from the group comprising amorphous, partly crystalline and crystalline solid polyesters containing at least one terminal group which derives from the adduct of dicyclopentadiene and maleic anhydride in a molar ratio of 1:1, and/or at least one endomethylenetetrahydrophthalic acid group.

19. The coating materials, adhesives or sealing compounds according to any of claims 15 to 18, **characterized in that** at least one further additive is present therein.

20. The coating materials, adhesives or sealing compounds according to any of claims 15 to 19, **characterized in that** they are present as powders, powder slurries, or in solution or dispersion in organic solvents.

21. The use of the coating materials, adhesives or sealing compounds according to any of claims 15 to 20 to produce coatings, adhesive films or seals for primed or unprimed substrates.

22. A process for producing coatings, adhesive films or seals for primed or unprimed substrates, wherein
(1) at least one coating material and/or adhesive and/or sealing compound according to any of claims 15 to 20 in the form of
(1.1) a melt,
(1.2) a powder,
(1.3) a powder slurry or
(1.4) a dispersion or a solution in at least one organic solvent
is applied to the primed or unprimed substrate,
(2) the resulting powder slurry film (1.3) or the resulting film of a dispersion or a solution (1.4) is dried or the resulting film of the melt (1.1) is caused to solidify or is maintained in the melted state by heating,
(3) the resulting solid film (1.2), (1.3) or (1.4) is melted by heating, and
(4) the melted film which results in process step (2) or (3),
(4.1) in the melted state,
(4.2) on solidification and/or
(4.3) after solidification,
is cured with actinic radiation.

23. The process according to claim 22, **characterized in that** the film is thermally cured by heating during or after process step (4) .

24. The process according to claim 22 or 23, **characterized in that** heating is carried out with near infrared (NIR) light.

25. Coatings, adhesive films or seals on primed or unprimed substrates, producible from coating materials, adhesives or sealing compounds according to any of claims 15 to 20 and/or producible by means of the process according to any of claims 22 to 24.

26. Primed and unprimed substrates, especially bodies of automobiles and commercial vehicles, industrial components, including plastics parts, packaging, coils and electrical components, or furniture, comprising at least one coating, at least one adhesive film and/or at least one seal according to claim 25.

## Revendications

1. Matière solide contenant
(a) en moyenne statistique plus d'un groupe comportant au moins une double liaison carbone-carbone par molécule, les groupes étant structurellement identiques ou différents les uns des autres et étant reliés par des groupes uréthanne à la structure de base de la matière solide, et
(b) 0,01 à 1 % en moles, par rapport aux doubles liaisons présentes, d'au moins un stabilisant lié chimiquement,
pouvant être préparée par réaction des produits de départ dans la masse fondue.

2. Matière solide selon la revendication 1, **caractérisée en ce qu'**on utilise comme produit de départ pour l'introduction de l'inhibiteur de polymérisation b) lié chimiquement au moins un composé HALS (photoprotecteur de type amine à empêchement stérique) comportant au moins un groupe réactif avec un isocyanate.

3. Matière solide selon la revendication 1 ou 2, **caractérisée en ce que** les groupes (a) sont choisis dans l'ensemble comprenant les groupes (méth)acrylate, éthacrylate, crotonate, cinnamate, éther vinylique, ester vinylique, dicyclopentadiényle, norbornényle, isoprényle, isopropényle, allyle et butényle ; éther dicyclopentadiénylique, norbornénylique, isoprénylique, isopropénylique, allylique et buténylique et les groupes ester dicyclopentadiénylique, norbornénylique, isoprénylique, isopropénylique, allylique et buténylique.

4. Matière solide selon la revendication 3, **caractérisée en ce qu'**elle contient au moins un groupe (méth)acrylate, en particulier un groupe acrylate, et au moins un groupe (a) choisi dans l'ensemble comprenant les groupes éthacrylate, crotonate, cinnamate, éther vinylique, ester vinylique, dicyclopentadiényle, norbornényle, isoprényle, isopropényle, allyle et butényle.; éther isoprénylique, isopropénylique, allylique et buténylique ainsi que les groupes ester isoprénylique, isopropénylique, allylique et buténylique.

5. Matière solide selon l'une quelconque des revendications 1 à 4, **caractérisée en ce qu'**elle contient des photo-amorceurs et/ou photo-co-amorceurs liés chimiquement.

6. Matière solide selon l'une quelconque des revendications 1 à 5, **caractérisée en ce qu'**elle contient des groupes fonctionnels (e) qui peuvent participer à des réactions de réticulation thermique avec des groupes (e) de leur propre type et/ou avec des groupes fonctionnels complémentaires (f).

7. Matière solide selon l'une quelconque des revendications 1 à 6, **caractérisée en ce qu'**elle est amorphe, partiellement cristalline ou cristalline.

8. Matière solide selon l'une quelconque des revendications 1 à 7, **caractérisée en ce qu'**elle présente un intervalle de fusion ou un point de fusion dans la plage de température de 40 à 130°C.

9. Matière solide selon l'une quelconque des revendications 1 à 8, **caractérisée en ce qu'**elle présente à 130°C une viscosité à l'état fondu de 50 à 20 000 mPa.s.

10. Matière solide selon l'une quelconque des revendications 1 à 9, **caractérisée en ce que** sa structure de base est de faible masse moléculaire, oligomère et/ou polymère.

11. Matière solide selon la revendication 10, **caractérisée en ce que** la structure de base oligomère et/ou polymère comporte des doubles liaisons à insaturation oléfinique.

12. Matière solide selon la revendication 10 ou 11, **caractérisée en ce que** la structure de base oligomère ou polymère dérive de résines de polyaddition, de résines de polycondensation et/ou de (co)polymères de monoméres à insaturation éthylénique, à structure statistique, alternée et/ou séquencée, linéaires, ramifiés, hyper-ramifiés, dendrimères et/ou à structure en peigne.

13. Matière solide selon la revendication 12, **caractérisée en ce que** les (co)polymères sont des poly(méth)acrylates et/ou des poly(ester vinylique)s partiellement saponifiés et les résines de polyaddition et/ou les résines de polycondensation sont des polyesters, des alkydes, des polyuréthannes, des polyester-polyuréthannes, des polylactones, des polycarbonates, des polyéthers, des polyéther-polyesters, des adduits résine époxy-amine, des polyurées, des polyamides ou des polyimides, en particulier des polyesters, des polyester-polyéthers, des polyuréthannes et des polyester-polyuréthannes.

14. Utilisation de la matière solide selon l'une quelconque des revendications 1 à 13, en tant que matière de revêtement, adhésif ou matériau d'étanchéité, réticulable thermiquement et/ou par un rayonnement actinique, ou pour la production de matières de revêtement, adhésifs ou matériaux d'étanchéité, réticulables thermiquement et/ou par un rayonnement actinique.

15. Matières de revêtement, adhésifs ou matériaux d'étanchéité contenant au moins une matière solide selon l'une quelconque des revendications 1 à 13.

16. Matières de revêtement, adhésifs ou matériaux d'étanchéité selon la revendication 15, **caractérisés en ce qu'**au moins un autre composant durcissable par un rayonnement actinique est contenu dans ceux-ci.

17. Matières de revêtement, adhésifs ou matériaux d'étanchéité selon la revendication 16, **caractérisés en ce que** l'autre composant est choisi dans le groupe comprenant des copolymères (méth)acryliques, des polyétheracrylates, des polyesteracrylates, des polyesters insaturés, des époxyacrylates, des aminoacrylates, des mélamine-acrylates, des silicone-acrylates et les méthacrylates correspondants, à fonction (méth)acryloyle.

18. Matières de revêtement, adhésifs ou matériaux d'étanchéité selon la revendication 17, **caractérisés en ce que** le polyester insaturé est choisi dans le groupe comprenant des polyesters solides amorphes, partiellement cristallins et cristallins comportant au moins un groupe terminal qui dérive de l'adduit de dicyclopentadiène et d'anhydride maléique dans le rapport molaire 1:1, et/ou au moins un groupe acide endométhylènetétrahydrophtalique.

19. Matières de revêtement, adhésifs ou matériaux d'étanchéité selon l'une quelconque des revendications 15 à 18, **caractérisés en ce qu'**au moins un autre additif est contenu dans ceux-ci.

20. Matières de revêtement, adhésifs ou matériaux d'étanchéité selon l'une quelconque des revendications 15 à 19, **caractérisés en ce qu'**elles se trouvent sous forme de poudre, dispersions de poudre ou dissoutes ou dispersées dans des solvants organiques.

21. Utilisation des matières de revêtement, adhésifs ou matériaux d'étanchéité selon l'une quelconque des revendications 15 à 20, pour la production de revêtements, de couches adhésives ou d'étanchéités pour des supports revêtus ou non d'un primaire.

22. Procédé pour la production de revêtements, de couches adhésives ou d'étanchéités pour des supports revêtus ou non d'un primaire, dans lequel
(1) on applique sur le support revêtu ou non d'un primaire au moins une matière de revêtement et/ou un adhésif et/ou au moins un matériau d'étanchéité selon l'une quelconque des revendications 15 à 20, sous la forme
(1.1) d'une masse fondue,
(1.2) d'une poudre
(1.3) d'une suspension de poudre ou
(1.4) d'une dispersion ou solution dans au moins un solvant organique,
(2) la couche de suspension de poudre (1.3) résultante ou la couche résultante d'une dispersion ou d'une solution (1.4) est séchée ou on laisse se solidifier la couche résultante de la masse fondue (1.1) ou on la maintient encore à l'état fondu,
(3) on fait fondre par chauffage la couche solide (1.2), (1.3) ou (1.4) résultante et
(4) on fait durcir à l'aide d'un rayonnement actinique la couche fondue résultant de l'étape de processus (2) ou (3)
(4.1) à l'état fondu,
(4.2) lors de la solidification et/ou
(4.3) après la solidification.

23. Procédé selon la revendication 22, **caractérisé en ce qu'**on fait durcir thermiquement la couche par chauffage pendant ou après l'étape (4) de processus.

24. Procédé selon la revendication 22 ou 23, **caractérisé en ce qu'**on effectue le chauffage avec un rayonnement infrarouge proche (IRP).

25. Revêtements, couches adhésives ou étanchéités sur supports revêtus ou non d'un primaire, pouvant être produits à partir de matières de revêtement, adhésifs ou matériaux d'étanchéité selon l'une quelconque des revendications 15 à 20 et/ou pouvant être produits à l'aide du procédé selon l'une quelconque des revendications 22 à 24.

26. Supports revêtus ou non d'un primaire, en particulier carrosseries d'automobiles et de véhicules utilitaires, pièces de construction industrielles, y compris pièces en matière plastique, emballages, rubans continus et composants électriques, ou meubles, comportant au moins un revêtement, au moins une couche adhésive et/ou au moins une étanchéité selon la revendication 25.
